# EUROPEAN PATENT APPLICATION

(11) **EP 3 214 835 A1**
(43) Date of publication of application: **06.09.2017**
(21) Application number: 17155174.0
(22) Date of filing: 08.02.2017
(51) Int. Cl.: H04N 7/14, B25J 19/02, G05D 1/00

(54) **INFORMATION TERMINAL, RECORDING MEDIUM, COMMUNICATION CONTROL METHOD, AND COMMUNICATION SYSTEM**

(30) Priority: 16.02.2016 JP 2016027022
(71) Applicant: Ricoh Company, Ltd., Tokyo 143-8555 (JP)
(72) Inventor: KOKUBO, Atsushi, Tokyo, 143-8555 (JP)
(74) Representative: Schwabe - Sandmair - Marx

(57) **Abstract**

A first information terminal includes: a first imaging unit configured to capture a first video near a device to which the first information terminal is attached, and to generate first video data; a transmitting unit configured to transmit the first video data to a second information terminal that receives an operation for operating the device; a moving state determining unit configured to determine a moving state of the device, the moving state being made in response to the operation; and a video data transmission controller configured to control whether or not to transmit one of the first video data and the second video data from the transmitting unit depending on the moving state. The second video data is generated by a second imaging unit capturing a second video near the device. The second imaging unit is different from the first imaging unit.

## Description

### BACKGROUND OF THE INVENTION

### 1. Field of the Invention

The disclosures herein generally relate to an information terminal, a recording medium, a communication control method, and a communication system.

### 2. Description of the Related Art

Videoconference systems are widely used. In a videoconference system, a videoconference is conducted between a plurality of locations by using information terminals over communication networks such as the Internet or Local Area Network (LAN).

One technique of remotely controlling a robot by a user on a separate location is known (e.g., see Japanese Translation of PCT International Application Publication No. JP-T-2012-523890). In this technique, a user in a remote station is able to move a robot by remote control.

By attaching an information terminal B at a robot, a worker A working at home, for example, is able to operate the robot through an information terminal A and move the robot near a worker B working in an office. Hence, on the information terminal A, the worker A is able to see the worker B's facial expressions acquired by the information terminal B. The worker A is also able to talk with the worker B, while displaying the worker A's face on the information terminal B. In other words, a simple conference is enabled. Robots suitable for such uses are called telepresence robots.

### SUMMARY OF THE INVENTION

In one embodiment, an information terminal that is a first information terminal includes: a first imaging unit configured to capture a first video near a device to which the first information terminal is attached, and to generate first video data; a transmitting unit configured to transmit the first video data to a second information terminal that receives an operation for operating the device; a moving state determining unit configured to determine a moving state of the device, the moving state being made in response to the operation; and a video data transmission controller configured to control whether or not to transmit one of the first video data and the second video data from the transmitting unit depending on the moving state. The second video data is generated by a second imaging unit capturing a second video near the device. The second imaging unit is different from the first imaging unit.

Quality degradation of images or sounds is prevented, although the information terminal is attached at the device.

### BRIEF DESCRIPTION OF THE DRAWINGS

FIG. 1A and FIG. 1B illustrate an example of a schematic configuration of a communication system using a telepresence robot;
FIG. 2 illustrates an example of a schematic configuration of a communication system in which a plurality of cameras are attached to a moving device;
FIG. 3 illustrates a configuration example of a communication system;
FIG. 4 illustrates an example of a hardware configuration of an information terminal;
FIG. 5 illustrates an example of a hardware configuration of a communication management system;
FIG. 6 illustrates an example of a hardware configuration of the moving device;
FIG. 7 illustrates an example of a functional configuration of the communication system;
FIG. 8 is a sequence chart indicating an example of a process in a preparatory stage for communication in the communication system;
FIG. 9 illustrates an example of a destination selection screen displayed on the information terminal;
FIG. 10 is a sequence chart indicating an example of a communication process in the communication system;
FIG. 11A and FIG. 11B schematically illustrate an example of a method for determining a moving state;
FIG. 12 illustrates an example of a sequence indicating a procedure to stop transmitting audio and video data from a secondary terminal;
FIG. 13 schematically illustrates an example of a method for determining the moving state;
FIG. 14 illustrates an example of a sequence indicating a procedure to stop transmitting the audio and video data from the secondary terminal;
FIG. 15 illustrates an example of a sequence indicating a procedure to stop transmitting the audio and video data from the secondary terminal;
FIG. 16 illustrates an example of a case where it is desirable for the secondary terminal to display on a display unit the video that has been transmitted from an information terminal; and
FIG. 17 illustrates an example of a sequence indicating a procedure to stop transmitting the audio and video data from the secondary terminal.

### DESCRIPTION OF THE PREFERRED EMBODIMENTS

In the related-art system previously described, the information terminal B attached to a telepresence robot includes a camera. An operator (i.e., worker A) who operates the telepresence robot sees a video captured by the camera on the worker A's information terminal A, and operates the presence robot.

Provision of an additional camera that is different from the camera attached to the information terminal B can be considered. The information terminal B and additional camera transmit video data individually to the information terminal A, and thus the operator (i.e., worker A) is able to operate the robot easily and securely, seeing videos of several view angles.

It is a general object of at least one embodiment of the present invention to provide an information terminal, a recording medium, a communication control method, and a communication system that substantially obviate one or more problems caused by the limitations and disadvantages of the related art. When the information terminal is attached to a device, degradation in audio and image quality can be prevented.

In the following, embodiments of the present invention will be described with reference to the accompanying drawings.

### <Conference Using Telepresence Robot>

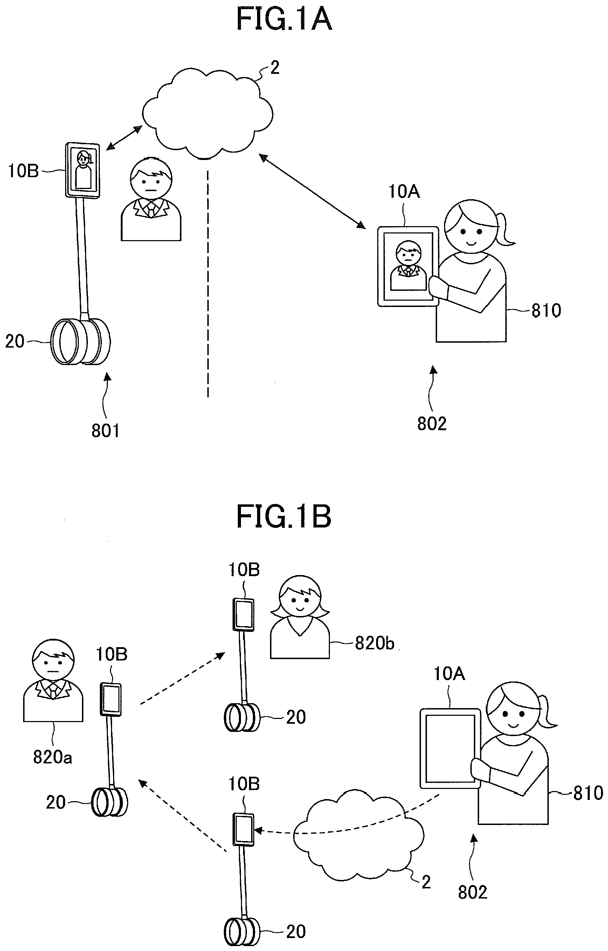

FIG. 1A illustrates an example of a schematic configuration of a communication system using a telepresence robot. A telepresence robot (hereinafter, simply referred to as a moving device 20) is arranged in an office 801. An operator 810 is in an operator's home 802. An information terminal 10B is arranged at the moving device 20. The operator 810 holds an information terminal 10A.

The information terminals 10A and 10B respectively include cameras and microphones, and transmit and receive audio and video data to and from each other. On the information terminal 10A, an application program configured to receive an operation for moving the moving device 20 is running. The operator 810 inputs an operator instruction, seeing the video transmitted from the information terminal 10B. The operator instruction input by the operator 810 is transmitted to the information terminal 10B from the information terminal 10A.

The information terminal 10B and the moving device 20 are capable of communicating with each other over a short-range wireless data exchange such as Bluetooth (Registered Trademark). This configuration enables the operator 810 to move the moving device 20 from a remote location (i.e., home).

The moving device 20 is made to move as described above, and the operator 810 is able to talk with an intended person 820, as illustrated in FIG. 1B. In FIG. 1B, the operator 810 moves the moving device 20 to the location of a person 820a, and talks with the person 820a. Then, the operator 810 moves the moving device 20 to another location of another person 820b, and talks with the person 820b.

In a case where the information terminal 10B includes only one camera, however, it is not easy for the operator 810 to understand the situations near the moving device 20. Therefore, an increase in number of cameras attached to the moving device 20 can be considered.

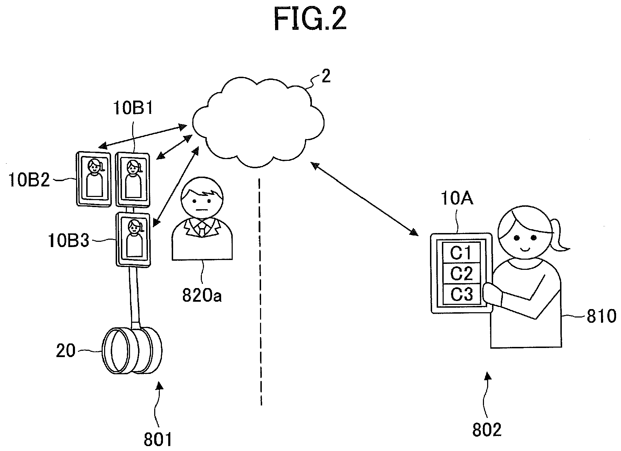

FIG. 2 illustrates an example of a schematic configuration of a communication system in which a plurality of cameras are attached to the moving device 20. In FIG. 2, three information terminals 10B1 to 10B3 serving as cameras are attached to the moving device 20. It is to be noted that the information terminal 10B1 and the information terminal 10B2 are illustrated side by side in the drawing, but in fact, the information terminal 10B1 and the information terminal 10B2 are arranged back to back.

Each of the information terminals 10B1 to 10B3 includes a camera, and three videos C1 to C3 are displayed on the information terminal 10A. The cameras of the information terminals 10B1 to 10B3 are arranged to capture videos of front side, rear side, and down side. This configuration enables the operator 810 to move the moving device 20, while seeing the situations surrounding the moving device 20.

On the other hand, the information terminals 10B1 to 10B3 are trying to transmit to the information terminal 10A the videos C1 to C3 that have been respectively captured by the information terminals 10B1 to 10B3. This increases loads on the communication bands, and may degrade video quality and audio quality of the videos C1 to C3 before the videos C1 to C3 are transmitted to the information terminal 10A. (For example, a video freezes, part of a video is lost, or a delay occurs.) In a case where the information terminal 10A transmits the video to all the information terminals 10B1 to 10B3, the video quality and audio quality of the videos C1 to C3 are more easily susceptible to degradation.

The information terminal 10B2 and the information terminal 10B3 in the present embodiment stop transmitting the videos C2 and C3 captured by the cameras and the audio acquired by the information terminal 10B2 and the information terminal 10B3, when the moving device 20 stops. While the moving device 20 is not moving, videos of multiple view angles are less necessary. Even if the information terminal 10B2 and the information terminal 10B3 stop transmitting the videos C2 and C3, inconvenience will not be caused so much. Since the information terminal 10B1 continues transmitting the video C1 and audio, the operator 810 is able to talk with the person 820a while seeing facial expressions of the person 820a. According to the system 1 in the present embodiment, while the moving device 20 is moving, the operator 810 is able to operate the moving device 20 while seeing surroundings of the moving device 20. When the moving device 20 stops, the operator 810 is able to talk with the person 820a by using the audio and video data with good quality.

### <Regarding Terms>

The operator 810 is a person who operates the moving device 20. The operator 810 is also a user of the information terminal 10A. In the present embodiment, the operator 810 is referred to as an "operator".

The person 820 with whom the operator 810 has a conversation may be a person in office, but may be an animal such as a dog or a cat. The moving device 20 may not necessarily be used by the operator 810 so as to talk with someone. For example, in a case where the moving device 20 patrols inside the office, the information terminal 10B can merely transmit audio and video data to the information terminal 10A. In some cases, the operator does not have a conversation with anyone.

The place where the moving device 20 moves is not limited to the inside of an office. Examples include, but are not limited to, any place where the moving device 20 is movable, such as in a building, a train, or a ship. In addition, the place is not limited to an indoor location. The moving device 20 may move outdoors, under water, in the air, etc. Further, the place where the operator 810 is located is not limited to the operator's home.

### <System Configuration Example>

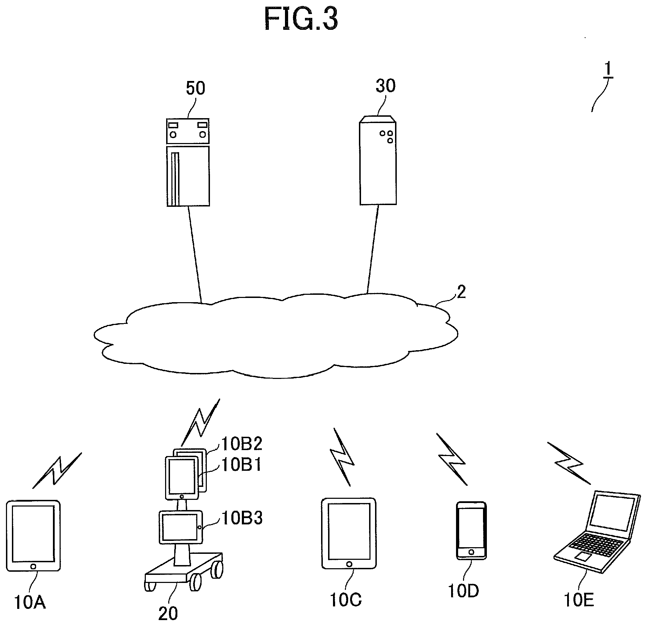

FIG. 3 illustrates a configuration example of a communication system in one embodiment. A communication system 1 includes a plurality of information terminals 10A, 10B, 10C, 10D, and 10E, a moving device 20, a relay 30, and a communication management system 50. In the following description, any one of the plurality of information terminals 10A, 10B, 10C, 10D, and 10E is referred to as an "information terminal 10". The number of information terminals 10 of FIG. 3 is an example.

The information terminal 10, the relay 30, and the communication management system 50 are coupled through a communication network 2 to other information terminals, devices, systems, to be capable of communicating with one another. Examples of the communication network 2 may include, but are not limited to, a Local Area Network (LAN), the Internet, a mobile telephone network, or a dedicated line network.

Examples of the information terminal 10 may include, but are not limited to, a general-purpose information processing device, such as a tablet terminal, a smartphone, a Personal Computer (PC), or a communication terminal for a dedicated videoconferencing device. The information terminal 10 is capable of transmitting and receiving, for example, audio and video data to and from at least one information terminal, to conduct a videoconference, for example.

In FIG. 3, the information terminals 10B1 to 10B3 are coupled to the moving device 20 to be capable of communicating with each other in a wired or wireless manner. By carrying out an application program (hereinafter, referred to as an application) that can run in the communication system 1, at least one of the information terminals 10B1 to 10B3 is capable of controlling a moving function of the moving device 20. Alternatively, the information terminals 10B1 to 10B3 may be movable terminals integrated with the moving device 20. In the following description, any one of the information terminals 10B1 to 10B3 is referred to as an information terminal 10B.

The information terminals 10B1 to 10B3 are arranged at the moving device 20 so that the operator can see surroundings of the moving device 20. As an example, the information terminal 10B1 is arranged to capture a video on the front side of the moving device 20, the information terminal 10B2 is arranged to capture a video on the rear side of the moving device 20, and the information terminal 10B3 is arranged to capture a video below the information terminal 10B3. However, the arrangements of the information terminals 10B1 to 10B3 are not limited to the above-described example. Two information terminals 10 may be arranged, or four or more information terminals 10 may be arranged. When at least one of the information terminals 10B1 to 10B3 includes a display, the other information terminals 10B can merely have a camera function.

Regarding the other information terminals 10, for example, the information terminal 10A carries out an application that can run in the communication system 1. This enables the information terminal 10A to perform a videoconference with the information terminal 10B, and also enables the information terminal 10A to remotely operate the moving device 20 through the information terminal 10B. For example, by operating an operational button displayed on a display screen for a videoconference, the information terminal 10A is capable of moving the moving device 20 to which the information terminal 10B is attached, for example, frontward, rearward, rightward, and leftward.

The moving device 20 has a moving function including "frontward movement", "rearward movement", "clockwise turning", and "counter-clockwise turning" by activating a plurality of wheels, for example, in response to control from the information terminal 10B attached to the moving device 20. It is to be noted that the outer appearance of the moving device 20 illustrated in FIG. 3 is merely an example. The moving device 20 may be movable together with the information terminal 10B in response to an operator instruction from the information terminal 10B attached to the moving device 20. The moving device 20 is an example of a device to be controlled by the information terminal 10B.

The relay 30 includes, for example, an information processing device, or a system including at least one information processing device. The relay 30 relays contents data transmitted to and received from the plurality of information terminals 10. However, the plurality of information terminals 10 may transmit and receive contents data directly, without using the relay 30.

The communication management system 50 may be, for example, an information processing device, or a system including at least one information processing device. The communication management system 50 performs, for example, login authentication for authenticating the information terminals 10, management of communication states of the information terminals 10, management of a destination list, and session control for communication through the relay 30 between the plurality of information terminals 10.

In the present embodiment, the communication management system 50 manages an operation right. The operation right is the right to operate the information terminal 10B and the moving device 20. For example, the communication management system 50 manages the operation right of the information terminal 10B so that at most one information terminal 10 can operate the information terminal 10B, while the plurality of information terminals 10 are participating in an identical session (e.g., identical videoconference) in which the information terminal 10B is also participating.

In one embodiment, a session is established, when the relay 30 relays the contents data including audio data (i.e., voice and other sound) and video data between a plurality of information terminals 10.

In the above configuration, for example, the operator of the information terminal 10A communicates with the information terminal 10B, and is able to move the moving device 20 by remote control. This configuration enables the operator of the information terminal 10A to move the moving device 20 and the information terminal 10B closer to any person with whom the operator of the information terminal 10A intends to talk. A videoconference is realized, accordingly.

In a case where the operator of the information terminal 10A is not accustomed to the operation of the moving device 20, the operator of the information terminal 10A may ask, for example, a user of the information terminal 10C who is accustomed to the operation of the moving device 20 to participate in a videoconference, so as to ask the user of the information terminal 10C to operate the moving device 20 in the videoconference.

Further, in the present embodiment, the communication management system 50 manages the operation right and changes the operation right from the information terminal 10A currently owning the operation right to the information terminal 10C.

According to the communication system in the present embodiment, as described above, in the communication system 1 including the information terminal 10B capable of controlling the moving device 20, the operator of the information terminal 10A is allowed to easily ask the user of the information terminal 10C to operate the moving device 20.

In the present embodiment, it is assumed that a videoconference system is an example of a communication system, a videoconference management system is an example of a communication management system, and a videoconference terminal is an example of a communication information terminal. The communication system 1, the communication management system 50, and the information terminals 10 will now be described. The information terminals 10 and the communication management system 50 are applicable not only to the videoconference system but also to another communication system. For example, the communication system 1 may be a telephone system. The information terminal 10 may be a mobile terminal such as an Internet Protocol (IP) telephone, a Personal Computer (PC), a notebook PC, a smartphone, a tablet terminal, etc.

It is to be noted that in the present embodiment, "television (TV) conference" can also mean "videoconference".

### <Hardware Configuration>

### <Hardware Configuration of Information Terminal>

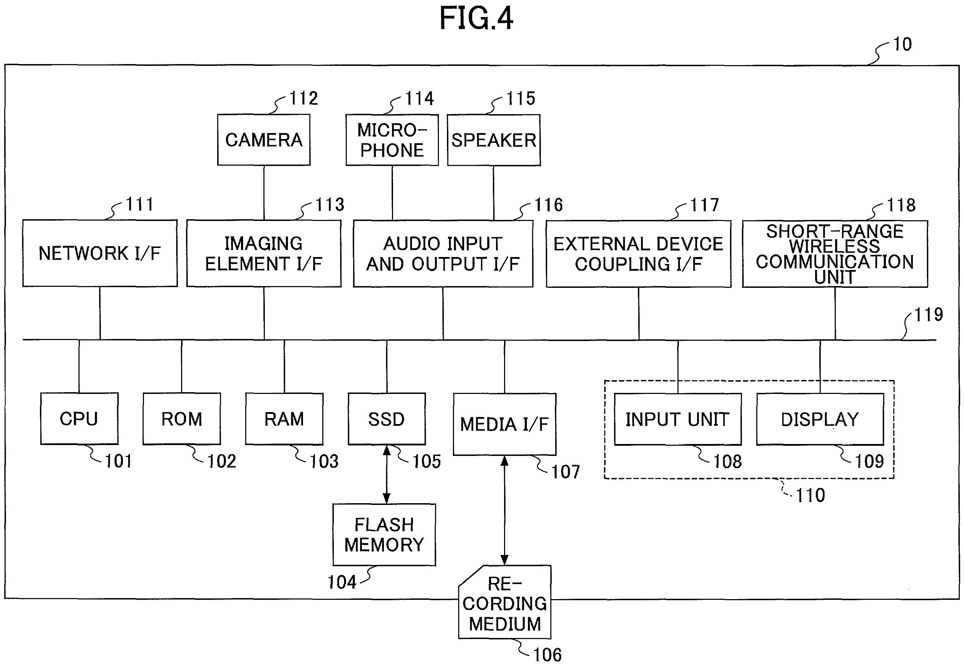

FIG. 4 illustrates an example of a hardware configuration of the information terminal in one embodiment. The information terminal 10 includes a configuration of a commonly-used computer. For example, the information terminal 10 includes a Central Processing Unit (CPU) 101, a Read Only Memory (ROM) 102, a Random Access Memory (RAM) 103, a flash memory 104, and a Solid State Drive (SSD) 105. The information terminal 10 includes a media interface (I/F) 107, and an input unit 108, a display 109, a network I/F 111, a camera 112, an imaging element I/F 113, a microphone 114, a speaker 115, and an audio input and output I/F 116. The information terminal 10 further includes an external device coupling I/F 117, a short-range wireless communication unit 118, and a bus 119.

The CPU 101 is a processor that enables functions of the information terminals 10, by reading out programs and data from the ROM 102 and the flash memory 104 and then performing the process. The ROM 102 may be a non-volatile memory storing programs beforehand, including an Initial Program Loader (IPL) used for starting up the CPU 101. The RAM 103 may be a volatile memory used as a work area of the CPU 101.

The flash memory 104 may be a storage device storing, for example, an Operating System (OS), application programs, and various data. The SSD 105 may control reading various data from the flash memory 104 and writing various data into the flash memory 104 in accordance with the control from the CPU 101. The media I/F 107 may control reading data from a recording medium 106 and writing (i.e., storing, recording) data into the recording medium 106. Examples of the recording medium 106 may include, but are not limited to, a memory card.

The input unit 108 may be an input device, such as a touch panel, a keyboard, or a pointing device, for receiving an input operation from a user. The display 109 is a display device for displaying images or a video to a user. The input unit 108 and the display 109 may be a display input unit 110 such as a touch panel display, in which a touch panel and a display are integrally formed.

The network I/F 111 may be a communication interface for the information terminal 10 to transmit and receive data by way of the communication network 2. The camera 112 includes an imaging element for capturing a video of a subject in accordance with control from the CPU 101. The imaging element I/F 113 controls video-capturing of the camera 112, and also converts the captured data into given video data. The microphone 114 converts picked-up sounds into electrical signals. The speaker 115 converts audio signals into sounds, and then outputs the converted sounds. The audio input and output I/F 116 controls inputting of sound and outputting of audio through the microphone 114 and the speaker 115.

The external device coupling I/F 117 may be an interface for coupling an external device such as a Universal Serial Bus (USB) device. The external device includes, for example, the moving device 20 illustrated in FIG. 3.

The short-range wireless communication unit 118 may be a communication interface for communicating with an external device (e.g., moving device 20) in short-range wireless communication such as Bluetooth (Registered Trademark) or Bluetooth (Registered Trademark) Low Energy. The bus 119 is commonly coupled to the above-described components to transmit address signals, data signals, and various control signals.

### <Hardware Configurations of Communication Management System and Relay>

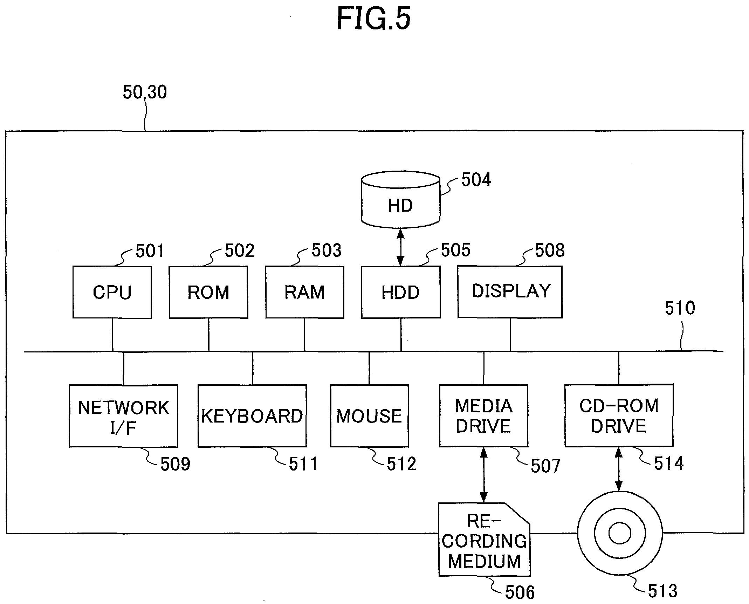

FIG. 5 illustrates an example of a hardware configuration of a communication management system in one embodiment. The communication management system 50 has a configuration of a commonly-used computer. The communication management system 50 includes, for example, a CPU 501, a ROM 502, a RAM 503, a HD 504, a Hard Disk Drive (HDD) 505, a media drive 507, a display 508, a network I/F 509, a keyboard 511, a mouse 512, a CD-ROM drive 514, and a bus 510.

The CPU 501 is a processor that reads out programs and data stored in the ROM 502 and the HD 504 and then performs the process, so as to enable functions of the communication management system 50. The ROM 502 is a non-volatile memory storing programs beforehand, including an IPL used for starting up the CPU 501. The RAM 503 is a volatile memory used as a work area of the CPU 501.

The HD 504 may be a storage device storing programs such as OS, application programs, and various data. The HDD 505 may control reading various data from the HD 504 and writing various data into the HD 504 in accordance with the control from the CPU 501. The display 508 may be a display device for displaying various types of information including cursor, menu, window, character, image, etc.

The network I/F 509 may be a communication interface for performing data communication by way of the communication network 2. The keyboard 511 is an example of an input device for receiving input operations of a user to input characters, numerical numbers, and various instructions. The mouse 512 is an example of a pointing device for receiving operations of a user, including selection and execution of various instructions, selection of process targets, movements of cursor, etc.

The media drive 507 controls, for example, reading data from a recording medium 506 and writing (i.e., storing, recording) data into the recording medium 506. Examples of the recording medium 506 may include, but are not limited to, a memory card. The CD-ROM drive 514 controls reading data from a disc 513. Examples of the disc 513 may include, but are not limited to, a detachable recording medium. The bus 510 may electrically couple the above configuration elements to transmit address signals, data signals, various control signals, etc.

It is to be noted that the above computer hardware configuration is merely an example. The display 508, the keyboard 511, and the mouse 512, for example, may be arranged at the outside of the communication management system 50.

The relay 30 is configured to have a similar hardware configuration to the hardware configuration of the communication management system 50. Programs for the information terminal 10, the relay 30, and the communication management system 50 may be recorded in an installable file format or in an executable file format to be distributed in a computer-readable recording medium. Examples of the above computer-readable recording medium include, but are not limited to, Compact Disc Recordable (CD-R), Digital Versatile Disk (DVD), and Blu-ray Disc. The recording medium such as a CD-ROM in which each program is recorded and the HD 504 in which the above programs are recorded can be supplied domestically and internationally as a Program Product.

### <Hardware Configuration of Moving Device>

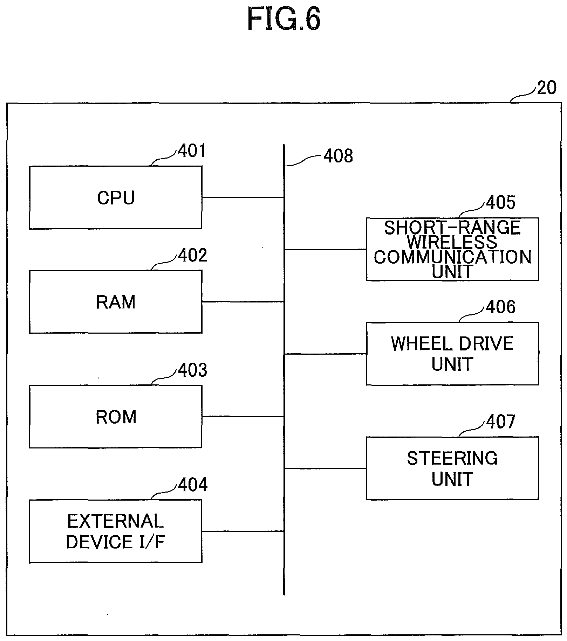

FIG. 6 illustrates an example of a hardware configuration of a moving device in one embodiment. The moving device 20 includes, for example, a CPU 401, a RAM 402, a ROM 403, and an external device I/F 404, a short-range wireless communication unit 405, a wheel driving unit 406, and a steering unit 407.

The CPU 401 is a processor that performs programs stored in the ROM 403 to enable functions of the moving device 20. The RAM 402 is a volatile memory used as a work area of the CPU 401. The ROM 403 is a non-volatile memory storing programs for the moving device 20. The ROM 403 may be a rewritable non-volatile memory such as a flash memory.

The external device I/F 404 is a wired communication interface having a wired connection to the external device coupling I/F 117 of the information terminal 10 in order to enable communication.

The short-range wireless communication unit 405 is, for example, a wireless communication interface in order to enable wireless communication in a wireless communication method, which is the same as the wireless communication method of the short-range wireless communication unit 118 of the information terminal 10. The moving device 20 can communicate with the information terminal 10 through, for example, the external device I/F 404 or the short-range wireless communication unit 405.

The wheel driving unit 406 is an example of a driving device for driving the wheels of the moving device 20 to move the moving device 20. The wheel driving unit 406 includes a motor, for example.

The steering unit 407 is an example of a steering device for steering the moving device 20 to move in accordance with the wheel driving unit 406. The steering unit 407 may be configured to change, for example, directions or inclinations of the wheels, or may be configured to control the rotation rates or speeds of right and left wheels so as to change the direction of the moving device 20.

### <Functional Configuration>

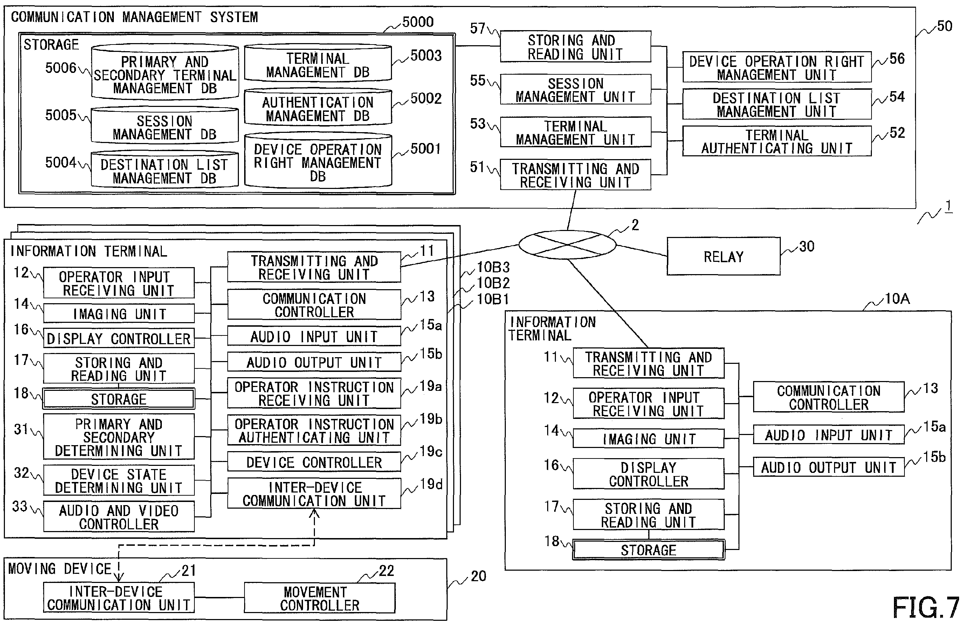

FIG. 7 illustrates an example of a functional configuration of the communication system 1.

### <Functional Configuration of Information Terminal 10A>

The information terminal 10A is one of the information terminals 10. The information terminal 10A receives, for example, an operator instruction for controlling a device that is the moving device 20, but does not have a control function for controlling the device that is the moving device 20. The information terminal 10A includes a transmitting and receiving unit 11, an operator input receiving unit 12, a communication controller 13, an imaging unit 14, an audio input unit 15a, an audio output unit 15b, a display controller 16, and a storing and reading unit 17. Each of the above units may be a function or means to be enabled when any one of the configuration elements illustrated in FIG. 4 operates in response to an instruction from the CPU 101 in accordance with a program for the information terminal 10. The program has been loaded on the RAM 103 from the flash memory 104. The information terminal 10 further includes a storage 18 enabled by the RAM 103 and the flash memory 104 illustrated in FIG. 4.

### <Functional Configuration of Information Terminal 10B>

The information terminal 10B is attached to the moving device 20. One or more information terminals 10B may be attached to the moving device 20. In FIG. 7, three information terminals 10B are attached and are respectively referred to as information terminals 10B1 to 10B3. The information terminals 10B1 to 10B3 can be categorized into primary terminal or secondary terminal. The primary terminal always transmits audio and video to the information terminal 10A (regardless of the moving state of the moving device 20). The secondary terminal stops transmitting the audio and video to the information terminal 10A, when the moving device 20 stops. The communication management system 50 holds categorization of the primary terminal and the secondary terminal. In order to learn such categorization, the information terminal 10B makes an inquiry to the communication management system 50. The reason why each information terminal 10B is categorized into the primary terminal or the secondary terminal is that different control processes are applied to the primary terminal and the secondary terminal.

It is to be noted that in the following description, the primary terminal is configured to control the moving device 20. However, the secondary terminal can control the moving device 20.

The information terminal 10B is an example of the information terminal 10. The information terminal 10B has a control function for controlling the device that is the moving device 20. The information terminal 10B includes a functional configuration that is the same as the functional configuration of the information terminal 10A as described above. The information terminal 10B further includes an operator instruction receiving unit 19a, an operator instruction authenticating unit 19b, a device controller 19c, an inter-device communication unit 19d, a primary and secondary determining unit 31, a device state determining unit 32, and an audio and video controller 33.

### <Functional Configuration of Information Terminal 10>

Next, each of the functional configurations of the information terminal 10 (i.e., information terminal 10A and information terminal 10B) will be described in detail. In the following description of the functional configuration of the information terminal 10, from the configuration elements illustrated in FIG. 4, relationships between the functional configuration of the information terminal 10 and main configuration elements for achieving the functional configuration will also be described.

The transmitting and receiving unit 11 is enabled by an instruction from the CPU 101 illustrated in FIG. 4 and the network I/F 111 illustrated in FIG. 4. The transmitting and receiving unit 11 transmits various data (or information) to and receives various data (or information) from other information terminals, devices, or systems. Before communicating with a desired destination terminal, the transmitting and receiving unit 11 starts receiving state information indicating a state of an information terminal serving as a destination candidate, from the communication management system 50. Such state information indicates an operating state (e.g., on-line state or off-line state). Additionally, in the case of on-line state, the state information also indicates a detailed state including "ready for communication" or "in communication", for example.

The operator input receiving unit 12 is enabled by an instruction from the CPU 101 illustrated in FIG. 4 and the input unit 108 illustrated in FIG. 4. The operator input receiving unit 12 receives various inputs made by a user. For example, when the user makes an operation for powering on the information terminal 10, the operator input receiving unit 12 receives such an operation and causes the information terminal 10 to power on.

The communication controller 13 is enabled by an instruction from the CPU 101 illustrated in FIG. 4. On receipt of the power-on instruction, for example, the communication controller 13 automatically transmits login request information indicating a login request and a current IP address of a login request terminal to the communication management system 50 through the communication network 2 from the transmitting and receiving unit 11. When the user makes an operation for powering off the information terminal 10, the transmitting and receiving unit 11 transmits state information indicating the power off of the information terminal 10 to the communication management system 50. Then, the operator input receiving unit 12 powers off the information terminal 10. This configuration allows the communication management system 50 to learn that the information terminal 10 turns into a power-off state from a power-on state.

The communication controller 13 performs various types of communication control, including establishment of a communication session for transmitting contents data through the relay 30 to other information terminals and receiving contents data through the relay 30 from other information terminals, and disconnection of the communication session. The communication controller 13 in the present embodiment includes a communication identification (i.e., communication ID) of the information terminal 10 in session control information (e.g., start request information or start response information, which will be described later), and then transmits the session control information to the communication management system 50.

The communication ID is an example of identification information of an account that is permitted to participate in a session in which contents data is transmitted and received by using the information terminal 10. Examples of the communication ID include, but are not limited to, a user ID that is identification information of a user, an application ID that is identification information of an application, and an owner ID that is identification information of an owner of the information terminal 10.

The imaging unit 14 is enabled by an instruction from the CPU 101, the camera 112, and the imaging element I/F 113 illustrated in FIG. 4. The imaging unit 14 converts image data acquired by image-capturing a subject into given image data (e.g., video data), and then outputs the converted image data.

The audio input unit 15 a is enabled by an instruction from the CPU 101 and the audio input and output I/F 116 illustrated in FIG. 4. After the microphone 114 converts user's voices into audio signals, the audio input unit 15a converts the audio signals into given audio data. Then, the audio input unit 15a outputs the converted audio data. The audio output unit 15b is enabled by an instruction from the CPU 101 and the audio input and output I/F 116 illustrated in FIG. 4. The audio output unit 15b converts the audio data into audio signals, and then outputs the converted audio signals to the speaker 115. Then, the speaker 115 outputs the sounds.

The display controller 16 is enabled by an instruction from the CPU 101 illustrated in FIG. 4. The display controller 16 displays on the display 109 or the display input unit 110, for example, the video data included in the contents data that has been received by the information terminal 10. The display controller 16 transmits information on the destination list that has been received from the communication management system 50 to the display 109. The destination list is displayed on the display 109, accordingly.

The storing and reading unit 17 is enabled by an instruction from the CPU 101 and the SSD 105 illustrated in FIG. 4. Alternatively, the storing and reading unit 17 is enabled by an instruction from the CPU 101. The storing and reading unit 17 performs the process of storing various data in the storage 18 and the process of reading out the stored various data from the storage 18.

The storage 18 stores, for example, authentication information such as the communication ID that has been described above and a password corresponding to the communication ID. The storage 18 also stores various types of information on the operation rights (e.g., the operation right and the transfer right) of the information terminal 10 and the moving device 20. The audio data and video data that are received when the communication with a destination terminal is performed are overwritten and saved in the storage 18, whenever the video data and audio data are received. In this situation, the display 109 displays the video corresponding to the video data that has been saved before being overwritten, and the speaker 115 outputs sounds corresponding to the audio data that has been saved before being overwritten.

Communication IDs and a relay ID in the present embodiment respectively indicate examples of identification information, such as words, characters, codes, and various marks, to be used for uniquely identifying the information terminal 10 and the relay 30. The communication ID and the relay ID may be identification information including at least two pieces from words, characters, codes, and various marks that are combined.

Subsequently, each of the functional configurations included in the information terminal 10B will be described.

The operator instruction receiving unit 19a is enabled by an instruction from the CPU 101 illustrated in FIG. 4, for example. The operator instruction receiving unit 19a receives operator instruction information through the transmitting and receiving unit 11 from another information terminal 10. The operator instruction information indicates a request for controlling the device (i.e., the moving device 20) to which the information terminal 10B is attached. The operator instruction information includes, for example, the communication ID of the information terminal 10 that has transmitted the operator instruction information and an operator instruction indicating a control content to be requested.

The operator instruction authenticating unit 19b is enabled by, for example, an instruction from the CPU 101 illustrated in FIG. 4. The operator instruction authenticating unit 19b authenticates whether the operator instruction information that has been received by the operator instruction receiving unit 19a came from the information terminal 10 having the operation right of the information terminal 10B. The operator instruction authenticating unit 19b stores in the storage 18, for example, the communication ID of the information terminal 10 that has the operation right of the information terminal 10B. The communication ID of the information terminal 10 has been notified from the communication management system 50. When the operator instruction receiving unit 19a receives the operator instruction information, the operator instruction authenticating unit 19b compares the communication ID included in the received operator instruction information with the communication ID, stored in the storage 18, of the information terminal 10 having the operation right of the information terminal 10B. When the communication IDs match, the operator instruction authenticating unit 19b permits authentication.

The device controller 19c is enabled by, for example, an instruction from the CPU 101 illustrated in FIG. 4. The device controller 19c controls the moving device 20 in response to an operator instruction included in the operator instruction information, which has been received by the operator instruction receiving unit 19a and to which the authentication has been permitted.

The inter-device communication unit 19d is enabled by, for example, an instruction from the CPU 101, the short-range wireless communication unit 118, and inter-device communication unit 19d illustrated in FIG. 4. Alternatively, the inter-device communication unit 19d is enabled by, for example, an instruction from the CPU 101 and the external device coupling I/F 117 illustrated in FIG. 4. In the present embodiment, in the following description, the inter-device communication unit 19d is assumed to communicate with the moving device 20 through the short-range wireless communication unit 118.

The primary and secondary determining unit 31 is enabled by, for example, an instruction from the CPU 101 illustrated in FIG. 4. The primary and secondary determining unit 31 determines whether the information terminal 10B is a primary terminal or a secondary terminal. As will be described later, a primary and secondary terminal management DB 5006 of the communication management system 50 manages whether the information terminal 10B is a primary terminal or a secondary terminal. The primary and secondary determining unit 31 acquires the information on whether the information terminal 10B is a primary terminal or a secondary terminal from the communication management system 50, when the information terminal 10B logs in. Alternatively, the information on whether the information terminal 10B is a primary terminal or a secondary terminal is stored beforehand in (a non-volatile portion of) the storage 18.

The device state determining unit 32 is enabled by, for example, an instruction from the CPU 101 illustrated in FIG. 4. The device state determining unit 32 determines a current moving state of the moving device 20. The moving state includes at least "moving" and "stopped". The moving state may include another state. There are mainly two methods of how the device state determining unit 32 determines the moving state. One method is to determine the moving state by acquiring the moving state from the moving device 20, and the other method is to determine the moving state in response to the operator instruction information.

The audio and video controller 33 is enabled by, for example, an instruction from the CPU 101 illustrated in FIG. 4. In a case where the information terminal 10B is a secondary terminal, the audio and video controller 33 transmits audio and video to the information terminal 10A while the moving device 20 is moving. The audio and video controller 33 stops transmitting the audio and video, when the moving device 20 stops. In a case where the information terminal 10B is a primary terminal, the audio and video controller 33 continues transmitting the audio and video to the information terminal 10A, although the moving device 20 stops.

### <Functional Configuration of Moving Device>

The moving device 20 includes, for example, an inter-device communication unit 21, and a movement controller 22. The inter-device communication unit 21 is enabled by, for example, an instruction from the CPU 401 and the external device I/F 404 illustrated in FIG. 6. Alternatively, the inter-device communication unit 21 is enabled by, for example, an instruction from the CPU 401 and the short-range wireless communication unit 405 illustrated in FIG. 6. Herein, the inter-device communication unit 21 is assumed to communicate with the information terminal 10B through the short-range wireless communication unit 405.

The movement controller 22 is enabled by, for example, an instruction from the CPU 401 illustrated in FIG. 6. The movement controller 22 controls, for example, the wheel driving unit 406 and the steering unit 407 of FIG. 6 in accordance with a control content that has been acquired from the information terminal 10A, so as to control the movement (e.g., moving or turning) of the moving device 20 to move frontward, move rearward, turn clockwise, or turn counter-clockwise.

### <Functional Configuration of Communication Management System>

The communication management system 50 includes a transmitting and receiving unit 51, a terminal authenticating unit 52, a terminal management unit 53, a destination list management unit 54, a session management unit 55, a device operation right management unit 56, and a storing and reading unit 57. Each of the above units may be a function or means to be enabled when any one of the configuration elements illustrated in FIG. 5 operates in response to an instruction from the CPU 501 in accordance with a program for the communication management system 50. The program has been loaded on the RAM 503 from the HD 504. The communication management system 50 further includes a storage 5000, which is enabled by, for example, the HD 504 illustrated in FIG. 5.

### <Each Functional Configuration of Communication Management System>

Next, each of the functional configurations of the communication management system 50 will be described in detail. In the following, the functional configuration of the communication management system 50 will be described. From the configuration elements illustrated in FIG. 5, relationships between the functional configurations of the communication management system 50 and main configuration elements for achieving the functional configurations will also be described.

The transmitting and receiving unit 51 is enabled by an instruction from the CPU 501 and the network I/F 509 illustrated in FIG. 5. The transmitting and receiving unit 51 transmits various data (or information) to other information terminals, devices, or systems, and receives various data (or information) from other information terminals, devices, or systems.

The terminal authenticating unit 52 is enabled by an instruction from the CPU 501 illustrated in FIG. 5. The terminal authenticating unit 52 determines whether a combination of a communication ID and a password included in the login request information that has been received through the transmitting and receiving unit 51 is included in an authentication management database (DB) 5002 to perform authentication of the information terminal 10.

The terminal management unit 53 is enabled by an instruction from the CPU 501 illustrated in FIG. 5. A terminal management DB 5003 of the terminal management unit 53 stores and manages each communication ID in association with a destination name, an operating state, a received time and date of request information, and an IP address of a request source terminal. For example, based on state information indicating the power off that has been transmitted from the information terminal 10 after the user powers off the information terminal 10, the terminal management unit 53 changes the operating state indicating "on line" to "off line" in the terminal management DB 5003. The terminal management DB 5003 will be described later.

The terminal management unit 53 is enabled by an instruction from the CPU 501 illustrated in FIG. 5. The terminal management unit 53 searches a destination list management DB 5004 by using a search key set to a communication ID of a request source terminal that has made a login request. Then, the terminal management unit 53 extracts a communication ID of a destination terminal that can talk with the request source terminal. In addition, the terminal management unit 53 searches the destination list management DB 5004 by using the search key set to the communication ID of the request source terminal that has made the login request, and extracts the communication ID of another request source terminal, which is registered as a destination terminal candidate of the request source terminal that has made the login request.

Further, the terminal management unit 53 searches the terminal management DB 5003 by using a search key set to the destination terminal candidate that has been extracted, and reads out an operating state for each communication ID that has been extracted. This configuration allows the terminal management unit 53 to acquire the operating state of the destination terminal candidate that can talk with the request source terminal that has made the login request. The terminal management unit 53 searches the terminal management DB 5003 by using a search key set to the communication ID that has been extracted, and also acquires the operating state of the request source terminal that has made the login request.

The destination list management unit 54 is enabled by an instruction from the CPU 501 illustrated in FIG. 5. The destination list management unit 54 adds or deletes a communication ID of a destination terminal for each communication ID of each request source terminal, in the destination list management DB 5004. The destination list management DB 5004 will be described later.

The session management unit 55 is enabled by an instruction from the CPU 501 illustrated in FIG. 5. The session management unit 55 controls sessions managed by the communication management system 50. Examples of the session control include, but are not limited to, control for session establishment, control for participation of the information terminal 10 in the established session, control for session disconnection, and creation of a session ID. In a session management DB 5005, the session management unit 55 stores and manages a request source communication ID of the information terminal 10 that has made a session start request and a destination communication ID of a destination terminal in association with a session ID, which is identification information of a session.

The device operation right management unit (e.g., setting unit) 56 is enabled by an instruction from the CPU 501 illustrated in FIG. 5. The device operation right management unit 56 manages, for example, an operation right, which is the right to operate the information terminal 10 (hereinafter, also referred to as a device controlling terminal) that controls the device that is the moving device 20. For example, the device operation right management unit 56 changes settings of the information terminals 10 through communication with the device controlling terminal, so that the information terminal 10 capable of operating the device that is the moving device 20 is changed to the information terminal 10B from the information terminal 10A.

The device operation right management unit 56 may also manage a transfer right, which is the right to transfer the operation right of the device controlling terminal to another information terminal 10. However, the transfer right may not be necessarily managed.

The device operation right management unit 56 may also manage a user who manages the device controlling terminal, a user who is accustomed to the operation of the device controlling terminal, and information (e.g., communication ID) on "device operation responsible terminal" that is an information terminal 10 of a person who is responsible for operating a predetermined device. However, the device operation responsible terminal may not be necessarily managed.

The storing and reading unit 57 is enabled by an instruction from the CPU 501 and the HDD 505 illustrated in FIG. 5. Alternatively, the storing and reading unit 57 is enabled by an instruction from the CPU 501. The storing and reading unit 57 stores various data in the storage 5000, and reads out various data from the storage 5000.

### <Example of Information Managed by Communication Management System>

Herein, databases stored in the storage 5000 of the communication management system 50 will be described.

**<Table 1>**

| DEVICE OPERATION RIGHT MANAGEMENT TABLE | | | 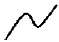 601 | |
|---|---|---|---|---|
| DEVICE CONTROL TERMINAL | TRANSFER RIGHT OWNING TERMINAL | OPERATION RIGHT OWNING TERMINAL | DEVICE OPERATION RESPONSIBLE TERMINAL | ▪▪▪ |
| 01b1 | 01aa | 01aa | 01aa | ▪▪▪ |
| 01bb | 01da | 01ca | 01ba, 01ca, ▪▪▪ | ▪▪▪ |
| 01cb | UNUSED | UNUSED | 01ca, 01cd | ▪▪▪ |
| 01db | UNSUPPORTED TERMINAL | UNSUPPORTED TERMINAL | - | ▪▪▪ |
| ▪▪▪ | ▪▪▪ | ▪▪▪ | ▪▪▪ | ▪▪▪ |

A device operation right management DB 5001 is stored in the storage 5000 of the communication management system 50. The device operation right management DB 5001 includes, for example, a device operation right management table 601 as indicated in Table 1. In the device operation right management table 601, for example, information on "transfer right owning terminal", "operation right owning terminal" and "device operation responsible terminal" are managed in association with the communication ID of the device controlling terminal that controls the moving device 20.

Information on "transfer right owning terminal" indicates information (e.g., communication ID) for identifying the information terminal 10 that owns the right to transfer (hereinafter, referred to as the transfer right) the device operation right, which is the right to operate the device controlling terminal. The device operation right management unit 56 stores and manages, for example, the transfer right owning terminal, which is the communication ID of the information terminal 10 that has firstly established a session with the device controlling terminal. In a case where the device operation right is transferred to the information terminal 10 and the device operation right is then returned from the information terminal 10, the device operation right management unit 56 stores and manages such an information terminal 10 owning the transfer right as an operation right owning terminal. It is to be noted that the information on "transfer right owning terminal" is optional, and may not be necessarily managed.

Information on "operation right owning terminal" indicates information (e.g., communication ID) for identifying the information terminal 10 owning the device operation right, which is the right to operate the device controlling terminal. The device operation right management unit 56 stores and manages, for example, "operation right owning terminal", which is the communication ID of the information terminal 10 that owns the device operation right to operate the device operation terminal.

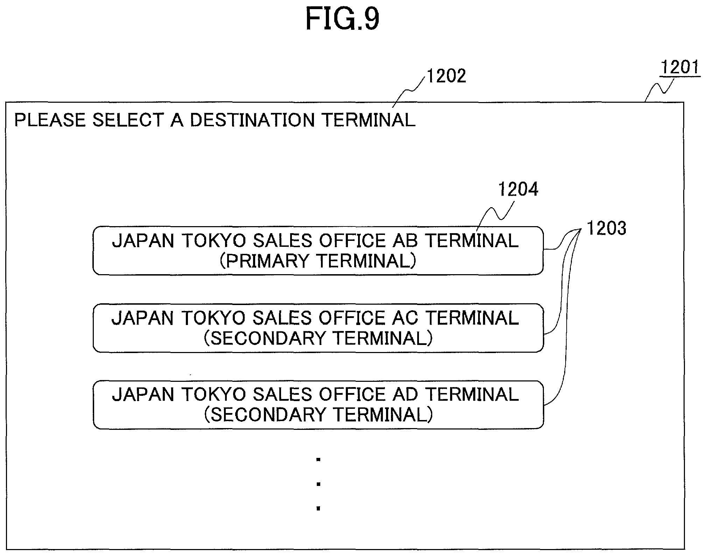

Information on "device operation responsible terminal" indicates, for example, information (e.g., communication ID) for identifying the information terminal 10 that is used by a person responsible for operating a predetermined device, such as a user who manages the device controlling terminal or a user who is accustomed to the operation of the device controlling terminal. As for information on "device operation responsible terminal", for example, the communication ID of a predetermined person is stored for each device controlling terminal. The above-described information is used for facilitating selection of the information terminal 10 to be used by a person responsible for device operation, on a destination selection screen (i.e., screen on which a destination is selected) illustrated in FIG. 9. It is to be noted that the information on "device operation responsible terminal" is optional, and may not be necessarily managed.

In the information included in the device operation right management table 601, "unused" indicates that the device controlling terminal is not currently being used (i.e., not participating in a session). In the information included in the device operation right management table 601, "unsupported terminal" indicates that the terminal is not a device controlling terminal. The device operation right management DB 5001 and the device operation right management table 601 are examples of a storage storing the information on the information terminal 10 owning the operation right, which is the right to operate the device controlling terminal.

**<Table 2>**

| AUTHENTICATION MANAGEMENT TABLE | | |
|---|---|---|
| TERMINAL ID | PASSWORD | 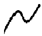 602 |
| 01aa | aaaa | |
| 01ab | abab | |
| 01ba | baba | |
| ▪▪▪ | ▪▪▪ | |

The authentication management DB 5002 is stored in the storage 5000 of the communication management system 50. The authentication management DB 5002 includes, for example, an authentication management table 602 as indicated in Table 2. In the authentication management table 602, a communication ID of the information terminal 10 managed in the communication management system 50 is associated and managed with a password corresponding to the communication ID. As an example, in the authentication management table 602 indicated in Table 2, the information terminal 10 having a communication ID "01aa" is associated with a password "aaaa".

**<Table 3>**

| TERMINAL MANAGEMENT TABLE | | | | 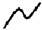 603 |
|---|---|---|---|---|
| TERMINAL ID | DESTINATION NAME | OPERATING STATE | RECEIVED TIME AND DATE | IP ADDRESS OF TERMINAL |
| 01aa | JAPAN TOKYO SALES OFFICE AA TERMINAL | ON LINE (READY FOR COMMUNICATION) | 20xx.4.10 13:40 | 1.2.1.3 |
| 01b1 | JAPAN TOKYO SALES OFFICE AB TERMINAL | ON LINE (READY FOR COMMUNICATION) | 20xx.4.10 13:40 | 1.2.1.4 |
| 01b2 | JAPAN TOKYO SALES OFFICE AC TERMINAL | ON LINE (READY FOR COMMUNICATION) | 20xx.4.10 9:50 | 1.2.1.5 |
| 01b3 | JAPAN TOKYO SALES OFFICE AD TERMINAL | ON LINE (IN COMMUNICATION) | 20xx.4.10 11:42 | 1.2.1.5 |
| ▪▪▪ | ▪▪▪ | ▪▪▪ | ▪▪▪ | ▪▪▪ |
| 01ba | CHINA BEIJING BA TERMINAL | ON LINE (READY FOR COMMUNICATION) | 20xx.4.10 13:45 | 1.2.2.3 |
| 01bb | CHINA SHANGHAI BB TERMINAL | ON LINE (TEMPORARILY HALTED) | 20xx.4.10 13:50 | 1.2.2.4 |
| ▪▪▪ | ▪▪▪ | ▪▪▪ | ▪▪▪ | ▪▪▪ |
| 01ca | US WASHINGTON D.C. OFFICE CA TERMINAL | OFF LINE | 20xx.4.10 12:45 | 1.3.1.3 |
| 01cb | US NEW YORK OFFICE CB TERMINAL | ON LINE (IN COMMUNICATION) | 20xx.4.10 13:55 | 1.3.1.4 |
| ▪▪▪ | ▪▪▪ | ▪▪▪ | ▪▪▪ | ▪▪▪ |
| 01da | EP BERLIN OFFICE DA TERMINAL | ON LINE (IN COMMUNICATION) | 20xx.4.08 12:45 | 1.3.2.3 |
| 01db | EP LONDON OFFICE DB TERMINAL | ON LINE (READY FOR COMMUNICATION) | 20xx.4.10 12:45 | 1.3.2.4 |
| ▪▪▪ | ▪▪▪ | ▪▪▪ | ▪▪▪ | ▪▪▪ |

The terminal management DB 5003 is stored in the storage 5000 of the communication management system 50. The terminal management DB 5003 includes, for example, a terminal management table 603 as indicated in Table 3. In the terminal management table 603, each communication ID is managed in association with a destination name in a case where an information terminal 10 is a destination, an operating state of the information terminal 10, a received time and date when the communication management system 50 received login request information, and an IP address of the information terminal 10. The login request information will be described later. As an example, in the terminal management table 603 indicated in Table 3, an information terminal 10 having a communication ID "01aa" has a terminal name "Japan, Tokyo Sales Office, AA terminal" and an operating state is "on line (ready for communication)". In addition, the information terminal 10 having the communication ID "01aa" indicates that the received time and date when the communication management system 50 received the login request information is "13:40 on April 10, 20xx" and the IP address is "1.2.1.3".

**<Table 4>**

| DESTINATION LIST MANAGEMENT TABLE | | 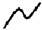 701 |
|---|---|---|
| REQUEST SOURCE TERMINAL ID | DESTINATION TERMINAL ID | |
| 01aa | 01b1, 01b2, 01b3 | |
| 01b1 | 01aa | |
| 01b2 | 01aa | |
| 01b3 | 01aa | |
| ▪▪▪ | ▪▪▪ | |
| 01db | 01ab, 01ba, ..., 01da, 01ca, 01cb, ..., 01da | |

A destination list management DB 5004 is stored in the storage 5000 of the communication management system 50. The destination list management DB 5004 includes, for example, a destination list management table 701, as indicated in Table 4. In the destination list management table 701, a communication ID of a request source terminal that requests a communication start in a videoconference is managed in association with all communication IDs of a destination terminal, which is registered as a destination terminal. As an example, in the destination list management table 701 indicated in Table 4, the information terminals having communication IDs "01b1", "01b2", and "01b3" are the destination terminal candidates, to which the request source terminal having the communication ID "01aa" is able to make a communication start request. The destination terminal candidate can be updated by adding or deleting by the destination list management unit 54, when the communication management system 50 receives a request for adding or deleting a destination terminal candidate from any request source terminal.

**<Table 5>**

| SESSION MANAGEMENT TABLE | | | | 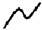 702 |
|---|---|---|---|---|
| SESSION ID | RELAY ID | REQUEST SOURCE TERMINAL ID | DESTINATION TERMINAL ID | TIME AND DATE WHEN PARTICIPATED IN SESSION |
| se1 | 111a | 01aa | 01b1 | 20xx/04/10 13:45:30 |
| | | | 01b2 | 20xx/04/10 13:50:30 |
| se2 | 111a | 01ad | 01ca | 20xx/04/10 13:11:11 |
| ▪▪▪ | ▪▪▪ | ▪▪▪ | ▪▪▪ | ▪▪▪ |

The session management DB 5005 is stored in the storage 5000 of the communication management system 50. The session management DB 5005 includes, for example, a session management table 702, as indicated in Table 5. In the session management table 702, each session ID that is session identification information is managed in association with a relay ID of the relay 30 used for relaying data, a communication ID of a request source terminal, a communication ID of a destination terminal, and a time and day when the session started. As an example, in the session management table 702 indicated in Table 5, a session having a session ID "se2" is established between a request source ID "01ad" and a destination communication ID "01ca". In addition, a session ID "se2" indicates that the session started at 13:11:11 of April 10, 20xx through the relay having a relay ID "111b".

**<Table 6>**

| PRIMARY AND SECONDARY TERMINALS MANAGEMENT TABLE 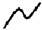 703 | |
|---|---|
| ROBOT TERMINAL (PRIMARY TERMINAL) | SECONDARY TERMINAL |
| 01b1 | 01b2, 01b3 |
| 01cb | 01da, 01db, 01dc |
| 01ce | None |
| 01db | 01ea, 01eb |
| ▪▪▪ | ▪▪▪ |

The primary and secondary terminal management DB 5006 is stored in the storage 5000 of the communication management system 50. The primary and secondary terminal management DB 5006 includes, for example, a primary and secondary terminal management table 703, as indicated in Table 6. A communication ID of a primary terminal and a communication ID of a secondary terminal are managed in association with each other in the primary and secondary terminal management table 703. As an example, in the primary and secondary terminal management table 703 indicated in Table 6, the communication ID "01b1" of the primary terminal is associated with communication IDs "01b2" and "01b3" of the secondary terminals. An administrator of the information terminals 10 can register the primary terminal and the secondary terminal in the communication management system 50 beforehand.

### <Flow of Process>

Next, the process flow of the communication system 1 will be described.

### <Process in Preparatory Stage>

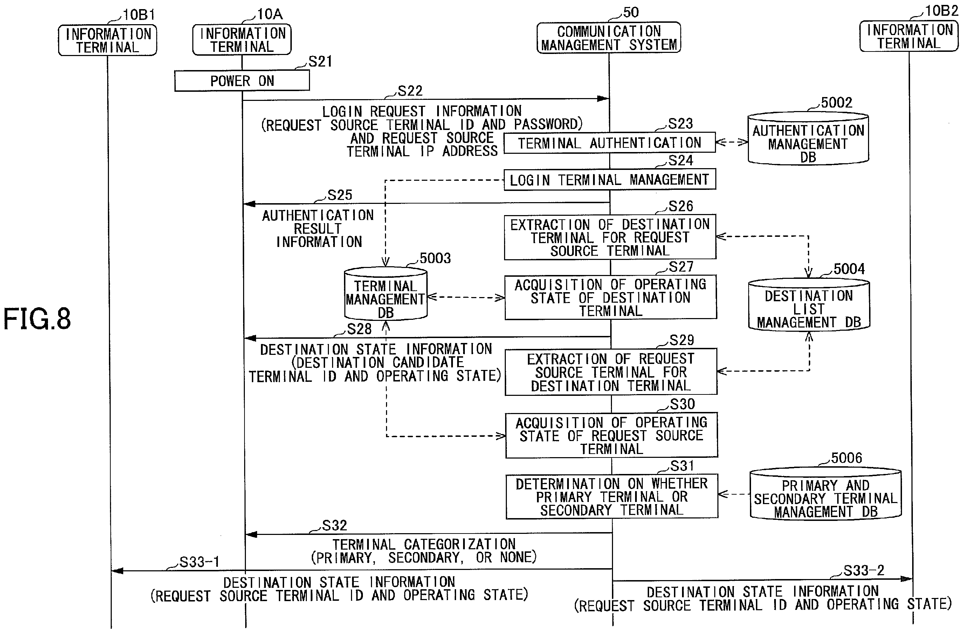

FIG. 8 is a sequence chart indicating an example of a process in a preparatory stage for communication in the communication system 1. Herein, as an example, the processes in a preparatory stage to be performed by the information terminal 10A, the information terminal 10B1, and the information terminal 10B2 before a session starts will be described. The information terminal 10B3 is omitted, but can be treated in a similar manner to the information terminal 10B1 and the information terminal 10B2. It is to be noted that in the following description, it is assumed that "01aa is a communication ID of the information terminal 10A, "01b1" is a communication ID of the information terminal 10B1, and "01b2" is a communication ID of the information terminal 10B2. In FIG. 8, it is also assumed that various types of management information are transmitted and received on a session for management information.

Firstly, an operator of the information terminal 10A that is a request source terminal performs an operation for powering on the information terminal 10A, for example. Then, the operator input receiving unit 12 illustrated in FIG. 7 receives the operation for powering on the information terminal 10A to power on the information terminal 10A (step S21).

At the timing of powering on, the communication controller 13 transmits the login request information for requesting login through the transmitting and receiving unit 11 to the communication management system 50 (step S22). As an example, the login request information is transmitted by the operation for powering on the information terminal 10A. As another example, a user may operate the input unit 108, or an application may be activated to transmit the login request information.

The login request information includes a communication ID and a password. The communication ID is, for example, a request source communication ID to identify the information terminal 10A that is a request source. The communication ID and the password are read out of the storage 18 through the storing and reading unit 17, for example. When the login request information is transmitted to the communication management system 50 from the information terminal 10A, the communication management system 50 on a receiving side learns an IP address of the information terminal 10A on a transmitting side.

Next, the terminal authenticating unit 52 of the communication management system 50 searches the authentication management table 602, as described above, by using a search key set to a communication ID and a password included in the login request information that has been received through the transmitting and receiving unit 51. The terminal authenticating unit 52 performs authentication on whether such a combination of the communication ID and the password included in login request information that has been received from the information terminal 10A is managed in the authentication management table 602 (step S23).

When the terminal authenticating unit 52 determines that the login request information is given from the information terminal 10A having a valid right of use, the terminal management unit 53 changes the operating state of the information terminal 10A having the communication ID "01aa" that is stored in the terminal management table 603 to "on line (ready for communication)". At this timing, the terminal management unit 53 updates the received time and date. The terminal management unit 53 also updates the IP address of the information terminal 10A, as necessary (step S24). Thus, the communication ID "01aa" of the information terminal 10A is managed in association with the operating state "on line (ready for communication)", the received time and day "13:40 April 10, 20xx", and the IP address "1.2.1.3" of the information terminal 10A in the terminal management table 603.

The transmitting and receiving unit 51 of the communication management system 50 transmits authentication result information indicating an authentication result that has been acquired by the terminal authenticating unit 52 through the communication network 2 to the information terminal 10A (step S25). The information terminal is a request source terminal that has made a login request. The case where the information terminal has been determined to have a valid right of use by the terminal authenticating unit 52 will be described in the following.

The terminal management unit 53 of the communication management system 50 searches the destination list management table 701 by using a search key "01aa", which is a communication ID of the request source terminal (i.e., information terminal 10A) that has made a login request. Then, the terminal management unit 53 extracts a communication ID of at least one destination terminal candidate capable of communicating with the request source terminal (i.e., information terminal 10A) (step S26). Here, as an example, "01b1", "01b2", and "01b3" are assumed to be extracted as the communication IDs of the destination terminals corresponding to the communication ID "01aa" of the request source terminal (i.e., information terminal 10A).

Subsequently, the terminal management unit 53 searches the terminal management table 603 by using search keys (i.e., "01b1", "01b2", and "01b3"), which are the communication IDs of the destination terminal candidates that have been extracted. The terminal management unit 53 reads out the operating states of the extracted IDs (i.e., "01b1", "01b2", and "01b3"), and acquires the operating states of the extracted IDs (i.e., "01b1", "01b2", and "01b3") (step S27).

Next, the transmitting and receiving unit 51 transmits destination state information including the operating states of the communication IDs (i.e., "01b1", "01b2", and "01b3") that are the destination terminal candidates, to the request source terminal (i.e., information terminal 10A) (step S28). The request source terminal (i.e., information terminal 10A) learns the operating states of the communication IDs (i.e., "01b1", "01b2", and "01b3") that can be destination terminal candidates of the request source terminal (i.e., information terminal 10A), accordingly.

The terminal management unit 53 of the communication management system 50 also searches the destination list management table 701 by using the search key "01aa", which is the communication ID of the request source terminal (i.e., information terminal 10A) that has made a login request. Then, the terminal management unit 53 extracts another communication ID of another request source terminal, which is registered as a destination terminal candidate in association with the communication ID "01aa" of the request source terminal (i.e., information terminal 10A) (step S29). From the destination list management table 701 indicated in Table 4, "01b1", "01b2", and "01b3" are extracted as other request source communication IDs.

Next, the terminal management unit 53 of the communication management system 50 searches the terminal management table 603 by using the search key "01aa", which is the communication ID of the request source terminal (i.e., information terminal 10A) that has made a login request. The terminal management unit 53 acquires an operating state of the request source terminal (i.e., information terminal 10A) that has made a login request, accordingly (step S30).

In addition, the terminal management unit 53 of the communication management system 50 refers to the primary and secondary terminal management table 703 and determines whether the request source terminal (i.e., information terminal 10A) having the communication ID "01aa" is a primary terminal or a secondary terminal (step S31). In other words, the terminal management unit 53 determines which the communication ID "01aa" is registered to be the primary terminal or the secondary terminal.

The transmitting and receiving unit 11 of the communication management system 50 transmits to the request source terminal (i.e., information terminal 10A) the terminal categorization indicating whether the communication ID "01aa" is a primary terminal or a secondary terminal. As the terminal categorization, any one of the primary terminal, the secondary terminal, and "None" indicating neither the primary terminal nor the secondary terminal is transmitted. Since the information terminal 10A is neither a primary terminal nor a secondary terminal, "None" is transmitted, in this case.

Then, the terminal management unit 53 of the communication management system 50 extracts the communication IDs ("01b1" and "01b2") having the operating states "on line (ready for communication)" from the communication IDs ("01b1", "01b2", and "01b3") extracted at step S29. The transmitting and receiving unit 51 transmits destination state information including the communication ID "01aa" and the operating state "on line (ready for communication)" of the request source terminal (i.e., information terminal 10A) to the information terminal 10B1 and the information terminal 10B2 respectively corresponding to the communication IDs "01b1" and "01b2" (step S33-1, step S33-2).

When the transmitting and receiving unit 51 transmits the destination state information to the information terminal 10B1 and the information terminal 10B2, the terminal management unit 53 refers to IP addresses of the information terminals 10 managed in the terminal management table 603, in accordance with the communication IDs (i.e., "01b1" and "01b2"). This configuration allows transmission of the communication ID "01aa" and the operating state "on line" of the request source terminal (i.e., information terminal 10A) that has made the login request to both destination terminals (i.e., information terminal 10B1 and information terminal 10B2) that are capable of communicating with the request source terminal (i.e., information terminal 10A).

On the other hand, other information terminals 10B1, 10B2, and 10B3 also perform the same process from step S22 to step S33-1 and step S33-2, after the power-on operation. Such power-on operations of the communication terminals 10B1, 10B2, and 10B3 are performed by an administrator of the moving device 20, for example. In step S32, the terminal categorization (e.g., primary) is transmitted to the information terminal 10B1 and the terminal categorization (e.g., secondary) is transmitted to the information terminal 10B2 and the information terminal 10B3.

### <Destination Selection Screen>

FIG. 9 illustrates an example of a destination selection screen displayed on the information terminal 10A. A destination selection screen 120 1illustrated in FIG. 9 displays a message 1202 prompting a user to select a destination information terminal 10 and a plurality of buttons 1203 for selecting the destination information terminal 10. The operator of the information terminal 10A selects, for example, one of the plurality of buttons 1203 that are displayed, and selects a destination terminal to which a session participation request is given.

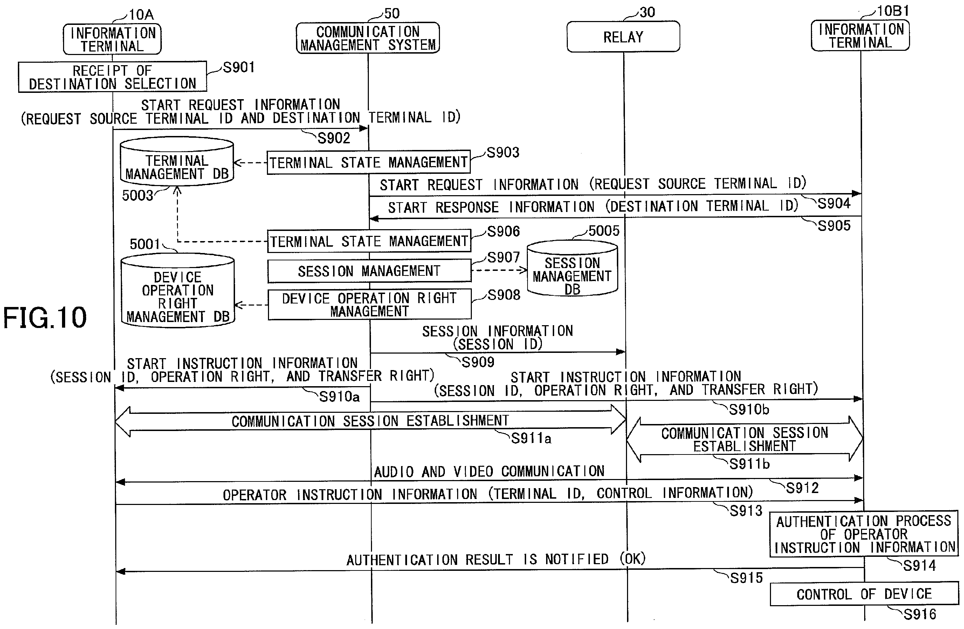

The plurality of buttons 1203 display terminal categorization 1204. The terminal categorization 1204 indicates whether each of the information terminals is a primary terminal or a secondary terminal. The terminal categorization 1204 can be displayed because the terminal categorization read out of the primary and secondary terminal management DB 5006 is included in the destination state information in step S28 of FIG. 8. The operator of the information terminal 10A selects at least a primary terminal, and makes a request for participating in a session. In the present embodiment, the information terminal 10A establishes sessions with three secondary terminals, respectively. Hence, the information terminal 10A also selects the secondary terminals and respectively makes requests for participating in sessions. In order to establish a session with a secondary terminal, the operator of the information terminal 10A may select only a primary terminal so as to automatically establish sessions with both the primary terminal and the secondary terminal. Alternatively, the operator of the information terminal 10A may select either a primary terminal or a secondary terminal so as to automatically establish a session with the secondary terminal. In this case, it is assumed that the communication management system 50 reads out the communication ID of the information terminal 10B, which is a primary terminal or a secondary terminal having the request source communication ID included in the start request information of FIG. 10, and then the start request information has been transmitted to both the primary terminal and the secondary terminal.

### <Communication Process>

FIG. 10 is a sequence chart indicating an example of a communication process in the communication system. Herein, an example of a communication management method will be described. In the communication management method, communication starts between the information terminal 10A and the information terminal 10B1. The information terminal 10B1 is a device controlling terminal capable of controlling the moving device 20.

In step S901, the operator input receiving unit 12 of the information terminal 10A receives a selection operation of selecting a destination terminal (e.g., information terminal 10B1). The selection operation is done by the operator of the information terminal 10A.

The transmitting and receiving unit 11 of the information terminal 10A transmits start request information to request a session start to the communication management system 50 (step S902). The start request information includes, for example, a request source communication ID and a destination communication ID. The request source communication ID is a communication ID of the information terminal 10A that is a request source terminal. The destination communication ID is a communication ID of the information terminal 10B1 that is a destination terminal. The start request information includes, for example, an IP address (i.e., request source IP address) of the information terminal 10A.

In step S903, the terminal management unit 53 of the communication management system 50 receives the start request information from the information terminal 10A. Then, the terminal management unit 53 updates the terminal management DB 5003 with the communication ID "01aa" of the request source terminal (i.e., information terminal 10A) included in the start request information. For example, the terminal management unit 53 changes information on the operating state of the communication ID "01aa" of the information terminal 10A to "on line (in communication)", and also updates the received time and date.

In step S904, the session management unit 55 of the communication management system 50 transmits the start request information to request a session start to the information terminal 10B1, which is the destination terminal. The start request information includes, for example, the request source communication ID of the information terminal 10A, which is the request source terminal.

In step S905, the information terminal 10B1 receives the start request information from the communication management system 50. Then, the information terminal 10B1 transmits start response information to the communication management system 50. The start response information includes, for example, a destination communication ID of the information terminal 10B1.

In step S906, the terminal management unit 53 of the communication management system 50 receives the start response information from the information terminal 10B1. The terminal management unit 53 updates the terminal management DB 5003 with the communication ID "01b1" of the information terminal 10B1 included in the start response information. For example, the terminal management unit 53 changes the information on the operating state of the communication ID "01b1" of the information terminal 10B1 to "on line (in communication)", and updates the information on the received time and date.

In step S907, the session management unit 55 of the communication management system 50 creates a session ID, which is identification information to identify each session. The session management unit 55 stores the created session ID in association with the request source communication ID (i.e., communication ID of the information terminal 10A) and the destination communication ID (i.e., communication ID of the information terminal 10B1), in the session management DB 5005.

In step S908, the device operation right management unit 56 of the communication management system 50 stores information regarding the information terminal 10A, which is the request source terminal, in the device operation right management DB 5001, such that the information terminal 10A serves as the information terminal 10 having the operation right and the transfer right of the information terminal 10B1 that is a device controlling terminal. For example, in the device operation right management table 601, the device operation right management unit 56 stores the communication ID "01aa" of the information terminal 10A in "transfer right owning terminal" and "operation right owning terminal" associated with the device controlling terminal "01b1".

In step S909, the session management unit 55 of the communication management system 50 transmits session information to the relay 30. The session information includes, for example, information on the session ID created in step S907.

In step S910a, the session management unit 55 of the communication management system 50 transmits start instruction information to instruct a session start to the information terminal 10A. Similarly, in step S910b, the session management unit 55 of the communication management system 50 transmits the start instruction information to instruct a session start to the information terminal 10B1.

The start instruction information includes, for example, information on the session ID, and the transfer right and the operation right of the information terminal 10B1. The information on the transfer right and the operation right of the information terminal 10B1 respectively correspond to "transfer right owning terminal" and "operation right owning terminal" in the device operation right management table 601.

In the above process, the communication management system 50 and the information terminal 10A hold the information of the operation right and the transfer right of the information terminal 10B1.

Optionally, the start instruction information transmitted to the information terminal 10A may include information on "device operation responsible terminal" in the device operation right management table 601.

In step S911a, the information terminal 10A establishes a session with the relay 30 in accordance with the received start instruction information. Similarly, in step S911b, the information terminal 10B1 establishes a session with the relay 30 in accordance with the received start instruction information.

This configuration allows the information terminal 10A and the information terminal 10B1 to participate in the communication session having an identical session ID. By transmitting and receiving contents data such as audio data and video data, for example, the information terminal 10A and 10B1 are capable of performing a videoconference (step S912). Similarly, the information terminal 10A establishes sessions with the information terminal 10B2 and the information terminal 10B3.

In addition, the information terminal 10A is capable of transmitting and receiving information on operations of a device (e.g., moving device 20) to and from the information terminal 10B1 over the established communication session.

The information on the device operations may be transmitted and received in a control session through the communication management system 50, without the use of a communication session. Alternatively, the information on the device operations may be transmitted and received between the information terminal 10A and the information terminal 10B over the communication network 2.

Herein, in the following description, the information terminal 10A is assumed to transmit and receive the information on operations for operating the device (e.g., moving device 20) to and from the information terminal 10B1 over the established session.

In step S913, the operator of the information terminal 10A makes an input on an operation screen of the device, and the operator instruction information made in accordance with the inputted operation is transmitted over the communication session. The operator instruction information includes, for example, an operator instruction the has been made in accordance with the communication ID of the information terminal 10A and an operation content that has been made by the operator.

In step S914, when the operator instruction receiving unit 19a of the information terminal 10B receives the operator instruction information transmitted from the information terminal 10A, the operator instruction authenticating unit 19b performs an authentication process of the operator instruction information that has been received. For example, the operator instruction authenticating unit 19b compares the communication ID included in the operator instruction information with the communication ID of the information terminal that owns the operation right of the information terminal 10B1. Here, the communication ID of the information terminal that owns the operation right of the information terminal 10B1 has been notified from the communication management system 50. When both communication IDs match, the operator instruction authenticating unit 19b permits authentication of the operator instruction information. The operator instruction authenticating unit 19b notifies the device controller 19c of the operator instruction information to which the authentication has been permitted.

In step S915, the operator instruction authenticating unit 19b of the information terminal 10B1 notifies the information terminal 10A of an authentication result. In the following description, the authentication result made in step S914 is assumed to be OK (i.e., permission).

In step S916, the device controller 19c of the information terminal 10B1 controls the moving device 20 through the inter-device communication unit 19d in response to the operator instruction included in the operator instruction information that has been notified.

### <Determination of Moving State>

Subsequently, three methods for determining, by the information terminal 10B, the moving state of the moving device 20 will be described.

### <First Method for Determining Moving State>

In the first method, the information terminal 10B acquires the moving state from the moving device 20, and then determines the moving state of the moving device 20. Specifically, the information terminal that controls the moving device 20 determines whether the moving device 20 is moving or is not moving, by communicating with the operation right owning terminal, which is one of a primary terminal or a secondary terminal, and acquiring the operator instruction information. In the present embodiment, the primary terminal is assumed to control the moving device 20 in the following description.

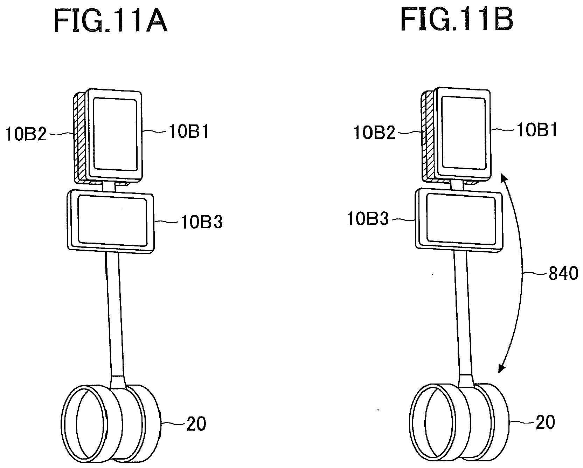

FIG. 11A and FIG. 11B schematically illustrate an example of a method for determining the moving state. FIG. 11A illustrates the information terminal 10B integrally formed with the moving device 20. In this case, the information terminal 10B is always monitoring the moving state of the moving device 20, or acquires the moving state at a given timing. Therefore, the moving state can be determined from a hardware state of the moving device 20.

FIG. 11B illustrates the information terminal 10B attached to the moving device 20. In a case where the moving device 20 and the information terminal 10B are formed separately, the information terminal 10B communicates with the moving device 20 through short-range wireless communication 840. The information terminal 10B communicates with the moving device 20 to acquire the hardware state of the moving device 20, and determines the moving state of the moving device 20, accordingly.

The final determination on whether the moving device 20 is moving or is not moving may be made depending on whether the acquired moving state continues for a certain period of time.

The information terminal 10B1 determines the moving state, and then reports a determination result to the information terminal 10B2 and the information terminal 10B3 that are attached to the moving device 20. This configuration enables a secondary terminal to stop transmitting the audio and video. The notification path may be the short-range wireless communication 840, or may include the communication management system 50. The secondary terminal stops capturing a video image near the moving device 20.

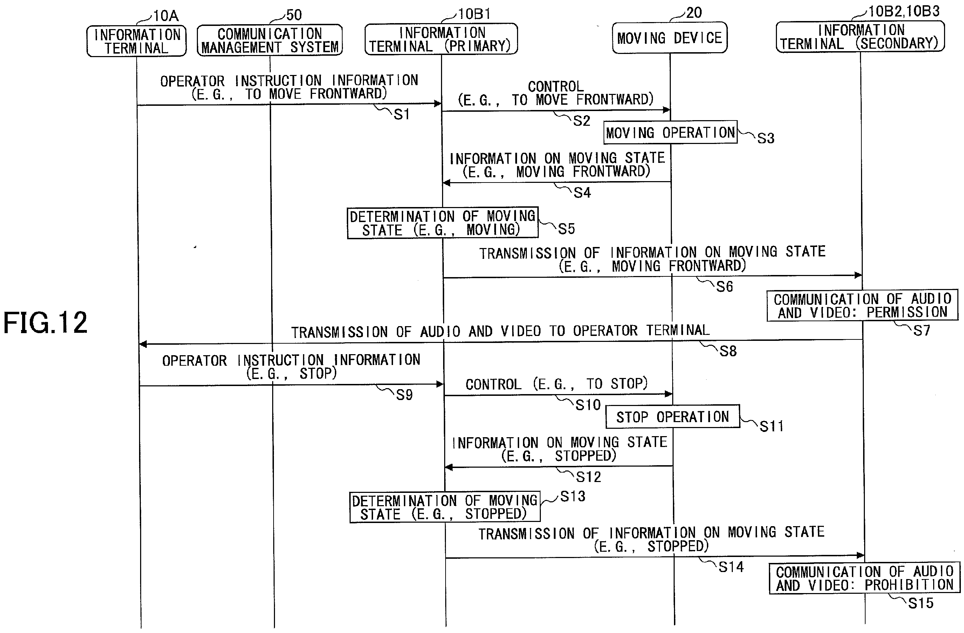

FIG. 12 illustrates an example of a sequence indicating a procedure to stop transmitting the audio and video from the information terminal 10B2 and the information terminal 10B3, which are secondary terminals. The process of FIG. 12 is repeatedly performed while the session is established. In FIG. 12, the information terminal 10A is the operation right owning terminal.
S1: When the operator input receiving unit 12 of the information terminal 10A receives an operation of an operator, the transmitting and receiving unit 11 transmits the operator instruction information through the communication management system 50 to the information terminal 10B1. The reason why the operator instruction information is transmitted to the information terminal 10B1 is that the primary terminal controls the information terminal 10. In a case where the secondary terminal controls the moving device 20, the operator instruction information is transmitted to the secondary terminal. Herein, for example, it is assumed that operator instruction information of frontward movement is transmitted.
S2: The operator instruction receiving unit 19a of the information terminal 10B1 receives the operator instruction information. The device controller 19c of the information terminal 10B1 controls the moving device 20 through the inter-device communication unit 19d, in response to an operator instruction included in the operator instruction information.
S3: The inter-device communication unit 21 of the moving device 20 receives the control instruction, and the movement controller 22 moves the moving device 20 frontward.
S4: The movement controller 22 of the moving device 20 transmits the moving state to the information terminal 10B1. Herein, "moving frontward" or "in motion" is transmitted.
S5: The device state determining unit 32 of the information terminal 10B1 acquires the moving state that has been transmitted from the moving device 20, and determines the type of moving state. Here, when the identical moving state continues for a certain period of time, such an identical moving state can be determined to be the moving state of the moving device 20.
S6: The transmitting and receiving unit 11 of the information terminal 10B1 transmits the moving state to the information terminal 10B2 and the information terminal 10B3. This configuration allows the information terminal 10B2 and the information terminal 10B3 that are secondary terminals to transmit the audio and video or to stop transmitting the audio and video, depending on the moving state of the moving device 20. The transmission path may include the communication management system 50, or may transmit the audio and video in short-range wireless communication such as Bluetooth (Registered Trademark). In step S6, the moving state including frontward moving or in motion is transmitted.
S7: The transmitting and receiving unit 11 of the information terminal 10B2 and transmitting and receiving unit 11 of the information terminal 10B3 receive the moving state, and the audio and video controllers 33 of the information terminal 10B2 and the information terminal 10B3 control the transmission and reception of the audio and video. Since the moving device 20 is moving frontward or in motion, the audio and video controller 33 determines transmission of the audio and video. In fact, the audio and video are being transmitted, and such transmission continues without change.
S8: Therefore, the information terminal 10B2 and the information terminal 10B3 transmit the audio and video to the information terminal 10A. It is to be noted that the information terminal 10B1 that is a primary terminal is always transmitting the audio and video, and the transmission step is omitted in FIG. 12.
S9: Next, similarly to step S1, the transmitting and receiving unit 11 of the information terminal 10A transmits the operator instruction information through the communication management system 50 to the information terminal 10B1. Here, it is assumed that the operator instruction information including, for example, "stop" is transmitted.
S10: The operator instruction receiving unit 19a of the information terminal 10B1 receives the operator instruction information. The device controller 19c of the information terminal 10B1 controls the moving device 20 through the inter-device communication unit 19d, in response to the operator instruction included in the operator instruction information that has been transmitted.
S11: The inter-device communication unit 21 of the moving device 20 receives the control instruction, and the movement controller 22 stops the moving device 20.
S12: The movement controller 22 of the moving device 20 transmits the moving state to the information terminal 10B1. Here, "stopped state" may be transmitted.
S 13: The device state determining unit 32 of the information terminal 10B1 acquires the moving state that has been transmitted from the moving device 20. Here, when an identical moving state continues for a certain period of time, such an identical moving state is determined to be the moving state of the moving device 20.
S 14: The transmitting and receiving unit 11 of the information terminal 10B1 transmits the moving state to the information terminal 10B2 and the information terminal 10B3. This configuration allows the information terminal 10B2 and the information terminal 10B3, which are secondary terminals, to transmit the audio and video or to stop transmitting the audio and video, depending on the moving state. In step S 14, the moving state of, for example, the stopped state is transmitted.
S15: The transmitting and receiving units 11 of the information terminal 10B2 and the information terminal 10B3 receive the moving state of the moving device 20, and the audio and video controllers 33 of the information terminal 10B2 and the information terminal 10B3 control transmission of the audio and video. While the moving device 20 is not moving, the audio and video controllers 33 stop transmitting the audio and video. Audio produces smaller loads on the communication band than video produces. For this reason, transmission of audio may not be necessarily stopped. Alternatively, only the transmission of audio may be stopped.

In such a method for determining the moving state, the information terminal 10B is capable of acquiring the moving state of the moving device 20. Therefore, the current state of the moving device 20 is determined correctly.

Although the moving device 20 stops, the information terminal 10B1 continues transmitting audio and video, whereas the information terminals 10B2 and the information terminal 10B3 stop transmitting the audio and video. This configuration prevents degradation in quality of audio and video to be transmitted from the information terminal 10B1. This configuration also prevents degradation in quality of audio and video to be transmitted from the information terminal 10A.

### <Second Method for Determining Moving State>

In the second method, the operator instruction information is transmitted to all the information terminals 10B1 to 10B3. Only the secondary terminal determines the moving state of the moving device 20 in response to the operator instruction information.

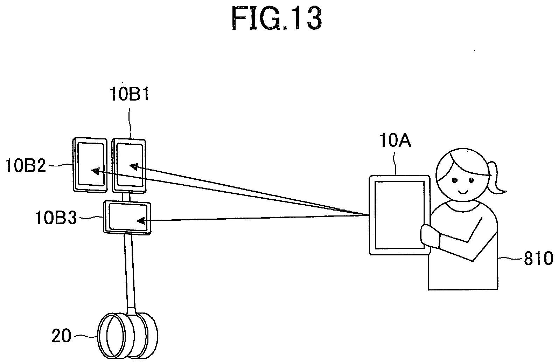

FIG. 13 schematically illustrates an example of a method for determining the moving state. Only one information terminal 10B controls the moving device 20 in accordance with the operator instruction information given from the information terminal 10A, which is the operation right owning terminal. However, the operator instruction information is transmitted to all the information terminals 10B1 to 10B3 attached to the moving device 20. The information terminal 10B2 and the information terminal 10B3, which are secondary terminals, determine whether the moving device 20 is moving or is not moving, depending on the operator instruction information. The final determination on whether the moving device 20 is moving or is not moving may be made under the condition that no further operator instruction information has been transmitted for a certain period of time since the operator instruction information was transmitted. Accordingly, only the secondary terminal that stops transmitting the audio and video determines whether the moving device 20 is moving or is not moving. However, the primary terminal may determine whether the moving device 20 is moving or is not moving, and may inform a secondary terminal of a determination result.

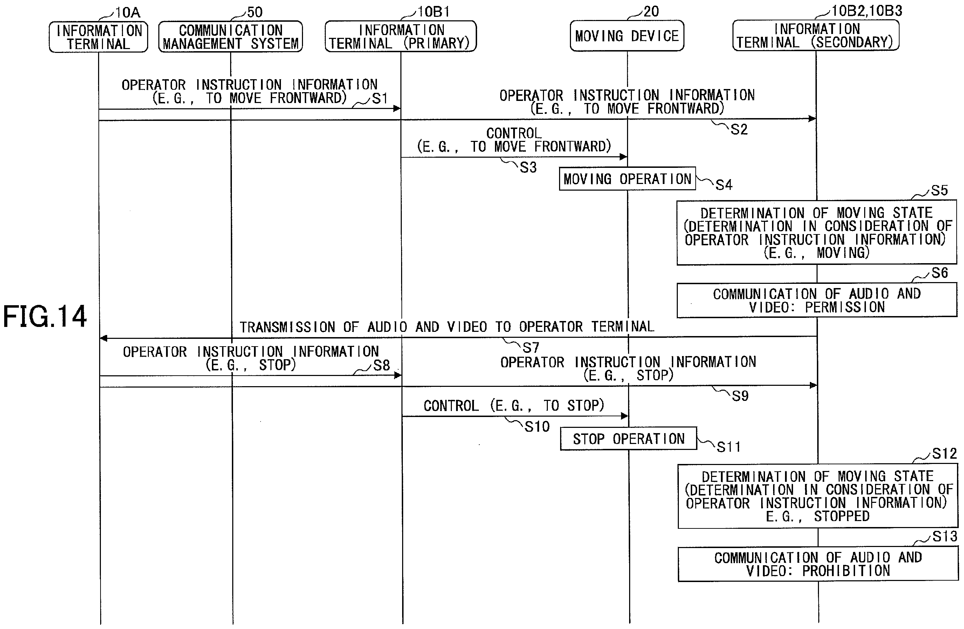

FIG. 14 illustrates an example of a sequence indicating a procedure to stop transmitting the audio and video from the information terminal 10B2 and the information terminal 10B3, which are secondary terminals. The process of FIG. 14 is repeatedly performed while the session is established. In FIG. 14, the information terminal 10A is the operation right owning terminal.
S1, S2: When the operator input receiving unit 12 of the information terminal 10A receives an operation of an operator, the transmitting and receiving unit 11 transmits the operator instruction information through the communication management system 50 to the information terminals 10B1, 10B2, and 10B3. The transmission to the information terminals 10B1, 10B2, and 10B3 allows the information terminal 10B1, which is configured to control the moving device 20, to control the moving device 20, and also allows the information terminal 10B2 and the information terminal 10B3, which are not configured to control the moving device 20, to determine the moving state of the moving device 20 from the operator instruction information.
S3: The operator instruction receiving unit 19a of the information terminal 10B1 receives the operator instruction information. The device controller 19c of the information terminal 10B1 controls the moving device 20 through the inter-device communication unit 19d, in response to the operator instruction included in the operator instruction information.
S4: The inter-device communication unit 21 of the moving device 20 receives the control instruction, and the movement controller 22 moves the moving device 20 frontward. The movement controller 22 of the moving device 20 may transmit the moving state to the information terminal 10B1, but the information terminal 10B1 does not determine the moving state.
S5: The device state determining units 32 of the information terminal 10B2 and the information terminal 10B3 determine the moving state of the moving device 20 in response to the operator instruction information. The device state determining unit 32 may make determination under the condition that no further operator instruction information has been transmitted for a certain period of time since the operator instruction information was transmitted.
S6: The audio and video controllers 33 of the information terminal 10B2 and the information terminal 10B3 control transmission of the audio and video. Since the moving device 20 is moving frontward or in motion, the audio and video controllers 33 of the information terminal 10B2 and the information terminal 10B3 determine transmission of the audio and video. However, the information terminal 10B2 and the information terminal 10B3 are transmitting the audio and video, and continue transmitting the audio and video without change.
S7: The information terminal 10B2 and the information terminal 10B3 transmit the audio and video to the information terminal 10A. It is to be noted that the information terminal 10B1, which is a primary terminal, is always transmitting the audio and video. Therefore, in FIG. 14, a transmission sequence of transmitting the audio and video by the information terminal 10B1 is omitted.
S8, S9: Next, in a similar manner to step S1, the transmitting and receiving unit 11 of the information terminal 10A transmits the operator instruction information through the communication management system 50 to the information terminal 10B1. Herein, it is assumed that the information terminal 10A transmits the operator instruction information for stopping the moving device 20, for example.
S10: The operator instruction receiving unit 19a of the information terminal 10B1 receives the operator instruction information. The device controller 19c of the information terminal 10B1 controls the moving device 20 through the inter-device communication unit 19d, in response to the operator instruction included in the operator instruction information that has been transmitted.
S11: The inter-device communication unit 21 of the moving device 20 receives the control instruction, and the movement controller 22 stops the moving device 20.
S12: The device state determining units 32 of the information terminal 10B2 and the information terminal 10B3 determine the moving state of the moving device 20, in response to the operator instruction information. Now, the operator instruction information including "stop" is transmitted, and the moving device 20 determines to stop moving. The device state determining unit 32 may make determination under the condition that no further operator instruction information has been transmitted for a certain period of time since the operator instruction information was transmitted.
S13: The audio and video controllers 33 of the information terminal 10B2 and 10B3 control transmission of the audio and video. While the moving device 20 is not moving, the audio and video controller 33 determines to stop transmitting the audio and video, and then stops transmitting the audio and video. It is to be noted that the secondary terminal may stop capturing the video near the secondary terminal.

In such a method for determining the moving state, both the secondary terminals determine the moving state of the moving device 20 in response to the operator instruction information. This configuration prevents an increase in processing load applied on the primary terminal. This configuration also eliminates the need for reporting the moving state to the secondary terminal from the primary terminal.

The information terminal 10B1 continues transmitting the audio and video, whereas the information terminal 10B2 and the information terminal 10B3 stop transmitting the audio and video. This configuration prevents degradation in quality of the audio and video transmitted from the information terminal 10A.

### <Third Method for Determining Moving State>

When the moving device 20 stops, the secondary terminals stop transmitting the audio and video. This is because the necessity for videos on several view angles is reduced for the information terminal 10A. When the moving device 20 stops next time, it is assumed that the operator 810 intends to have a conversation with someone. Therefore, a communication system for determining whether there is an input into the microphone 114 of the information terminal 10A will be described.

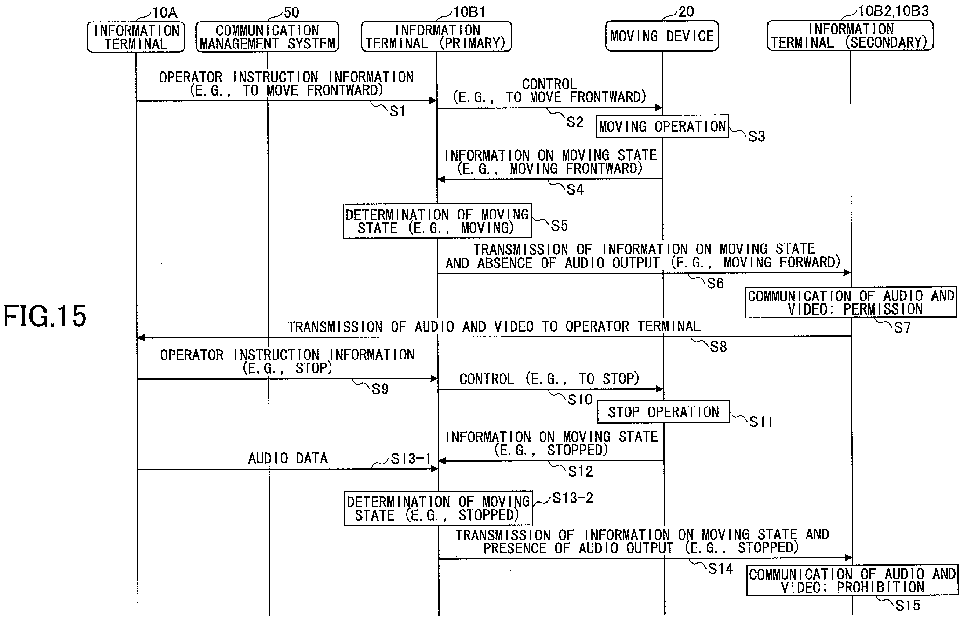

FIG. 15 illustrates an example of a sequence indicating a procedure to stop transmitting the audio and video from the secondary terminal 10B2 and the information terminal 10B3. In the process of FIG. 15, differences from FIG. 12 will be described mainly. The process of step S1 to step S4 may be the same as the process of step S 1 to step S4 of FIG. 12.
S5: The device state determining unit 32 of the information terminal 10B1 acquires the moving state that has been transmitted from the moving device 20, and then determines the moving state of the moving device 20. In addition, the device state determining unit 32 of the information terminal 10B1 determines whether audio data has been transmitted from the information terminal 10A, and also determines whether a volume of the audio data that has been transmitted is equal to or larger than a threshold value. In step S5, it is assumed that the moving device 20 is moving and the audio data equal to or larger than the threshold value is not transmitted.
S6: The transmitting and receiving unit 11 of the information terminal 10B1 transmits a moving state of "moving" and an audio output of "absence" to both the information terminal 10B2 and the information terminal 10B3. This configuration allows the secondary terminal to transmit the audio and video or to stop transmitting the audio and video, in response to the moving state of the moving device 20 and presence or absence of an input into the microphone 114 of the information terminal 10A. In step S7, the information terminal 10B2 and the information terminal 10B3 do not stop transmitting the audio and video. The process of subsequent steps S8 to S12 is the same as the process of the steps S8 to S12 of FIG. 12.
S13-1: The information terminal 10A transmits the audio data to the information terminal 10B1.
S13-2: The device state determining unit 32 of the information terminal 10B1 acquires the moving state that has been transmitted from the moving device 20.
S 14: The transmitting and receiving unit 11 of the information terminal 10B1 transmits the moving state of "stopped state" and the audio output of "presence" to the information terminal 10B2 and the information terminal 10B3. This configuration allows the secondary terminals to control transmission of the audio and video in response to the moving state of the moving device 20 and presence or absence of an input into the microphone 114.
S15: The information terminal 10B2 and the information terminal 10B3 determine to stop transmitting the audio and video, because the moving state is "stopped state" and the audio output is "presence".

In the method for determining the moving state as described above, when an operator stops the moving device 20 to have a conversation, the secondary terminals are capable of stopping transmitting the audio and video. In addition, the transmission of the audio and video is stopped, in a case where it is possible to predict that the device is not moving for a certain period of time during the conversation.

When the information terminal 10A also transmits the audio data to the information terminal 10B2 and the information terminal 10B3 in step S13-1, the information terminal 10A may not necessarily transmit the audio data in step S13-1.

The determination method of FIG. 15 may be applicable to the (second) method of FIG. 14. In this case, audio data may be transmitted to the information terminal 10B2 and the information terminal 103 from the information terminal 10A. The audio data may be transmitted to the information terminal 10B2 and the information terminal 10B3 from the information terminal 10B1.

### <Regarding Video Displayed on Secondary Terminal>

The secondary terminal may merely include a video-capturing function so that the information terminal 10A receives videos on several view angles. There is not a high need for the secondary terminal to display on the display 109 the video that has been transmitted from the information terminal 10A. However, depending on the case of using the secondary terminal, the secondary terminal is sometimes desired to display on the display 109 the video that has been transmitted from the information terminal 10A.

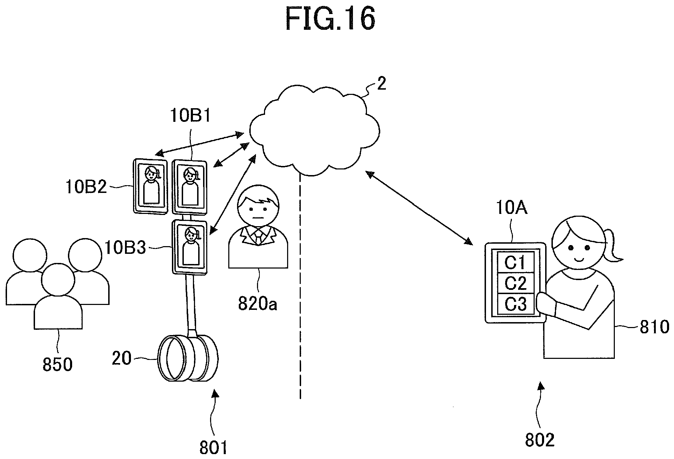

FIG. 16 illustrates an example of a case where a secondary terminal is desired to display on the display 109 the video that has been transmitted from the information terminal 10A. The information terminal 10B2 is one of the secondary terminals. The display 109 of the information terminal 10B2 faces in an opposite direction to the moving direction of the moving device 20. The moving device 20 moves toward a destination in order to guide guests 850 to the destination, for example. While the moving device 20 is moving, the guests 850 easily feel relieved, when seeing the face of the operator 810 who is operating the information terminal 10A on the display 109 of the primary terminal and on the display 109 of the secondary terminal. On the other hand, when the moving device 20 stops, the guests 850 will not feel inconvenience, although the face of the operator 810 is not being displayed. Therefore, as illustrated in FIG. 16, in a case where the secondary terminal displays on the display 109 the video that has been transmitted from the information terminal 10A, the secondary terminal may stop displaying the video on the display 109, when the moving device 20 stops. This configuration eliminates the need for the information terminal 10B2 and the information terminal 10B3, which are secondary terminals, to receive the video from the information terminal 10A. Then, the loads on the communication bands are reduced, and quality of the audio and video to be transmitted from the information terminal 10B1, which is a primary terminal, can be easily improved.

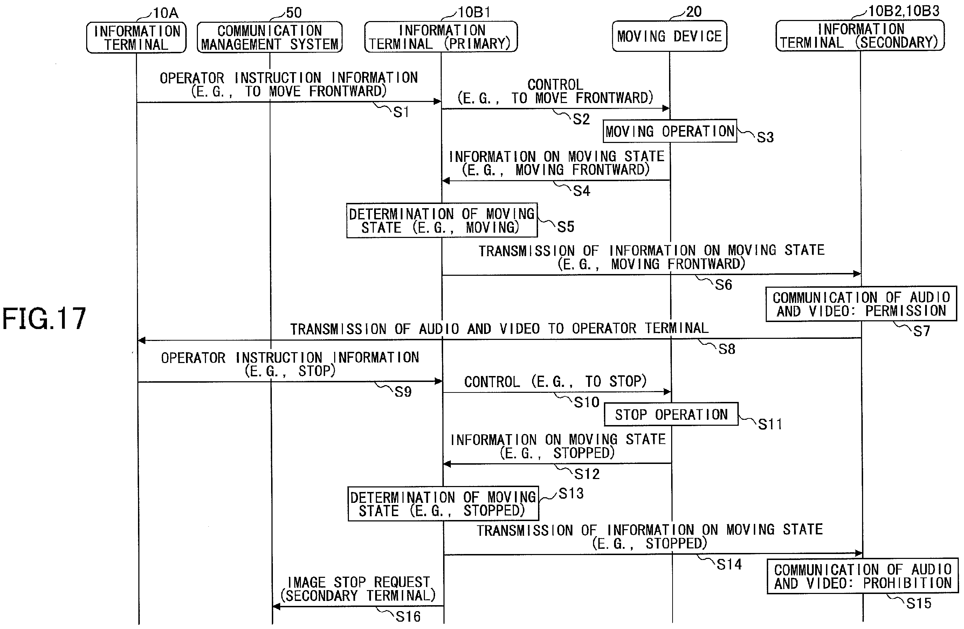

FIG. 17 illustrates an example of a sequence indicating a procedure to stop transmitting the audio and video from the information terminal 10B and the information terminal 10B3, which are secondary terminals. In the process of FIG. 17, differences from FIG. 12 will be described mainly. The process of step S1 to step S15 is the same as the process of step S1 to step S15 in FIG. 12.

S16: When the transmission of the audio and video is stopped at step S15, the transmitting and receiving unit 11 of the information terminal 10B1 transmits to the communication management system 50 a video stop request for stopping the video transmission to the secondary terminals. The communication management system 50 causes the relay 30 to stop relaying the audio and video transmitted from the information terminal 10A to the information terminal 10B2 and the information terminal 10B3. Then, the information terminal 10A transmits the video to the information terminal 10B1, but does not transmit the video to either the information terminal 10B2 or the information terminal 10B3. This configuration reduces loads on the communication bands, and easily improves quality of the audio and video to be transmitted from the information terminal 10B1, which is a primary terminal, accordingly. It is to be noted that the information terminal 10B2 or the information terminal 10B3 may transmit the video stop request to the information terminal 10A. The secondary terminal may give not only the video stop request but also an audio stop request, or may give the audio stop request to the information terminal 10A instead of the video stop request.

When the moving device 20 starts moving again, the information terminals 10B1, 10B2, and 10B3 respectively transmit video retransmission requests to the communication management system 50. This configuration allows the information terminals 10B1, 10B2, and 10B3 to display videos that have been transmitted from the information terminal 10A.

While the information terminal 10A stops transmitting the video, the information terminal 10B2 and the information terminal 10B3, which are the secondary terminals, may display videos that the information terminal 10B2 and the information terminal 10B3 already hold. For example, the information terminal 10B2 and the information terminal 10B3 may display a message such as "Please wait for a while, until the movement restarts" on the display 109. Displaying of such a message will not make the guests 850 have abrupt feeling, even if the information terminal 10B2 and the information terminal 10B3 stop displaying the videos.

The process of FIG. 7 is applicable to the (second) method of FIG. 14. In such a case, the information terminal 10B2 and the information terminal 10B3 that have stopped transmitting the audio and video transmit the audio stop request to the communication management system 50.

### <Other Application Examples>

Heretofore, the embodiments of the present invention have been described with examples, but the present invention is not limited to the embodiments or examples as described above. Various variations and modifications may be made without departing from the scope of the present invention.

For example, in the above description, the operator instruction is transmitted in a communication session. However, the operator instruction may be transmitted in a contents data session.

In the above description, a secondary terminal having almost the same functions as the functions of a primary terminal is attached to the moving device 20. However, the secondary terminal may merely have a video-capturing function, a transmitting function of transmitting the video data to the information terminal 10A, and a communication function of communicating with the primary terminal. The communication function of communicating with the primary terminal is not necessarily limited to the second method.

In the above description, the information terminals 10 communicate with one another through the relay 30. However, the information terminals 10 may communicate with one another, without the relay 30. As such a communication protocol, for example, Web Real-Time Communication (Web RTC) is known.

In the configuration example of FIG. 7, for example, the process is divided depending on the main function in order to facilitate understanding the process performed by the communication management system 50 and the information terminal 10. However, the present invention is not limited by the manner or name used for dividing the process into processing units. The process to be performed by the communication management system 50 and the information terminal 10 can be divided into a greater number of processing units depending on the process content. A single processing unit can be divided to include a further greater number of processing units.

In the above description, for convenience of description, the communication management system 50 and the relay 30 have been described as separate devices. However, any device having both functions of the communication management system 50 and the relay 30 may provide the functions of the communication management system 50 and the relay 30.

The communication system 1 may include a plurality of communication management systems 50. The functions of the communication management system 50 may be installed in a plurality of servers in a distributed manner.

At least one database stored in the storage 5000 of the communication management system 50 may reside on the communication network 2.

It is to be noted that the moving device 20 is an example of a device. The camera 112 is an example of a first imaging unit, and is an example of a second imaging unit. The transmitting and receiving unit 11 is an example of a first transmitting unit, and is an example of a second transmitting unit. The device state determining unit 32 is an example of a moving state determining unit. The audio and video controller 33 is an example of a video data transmission controller. The information terminal 10B is an example of a first information terminal. The information terminal 10A is an example of a second information terminal. The operator instruction receiving unit 19a is an example of an operator instruction information receiving unit. The device controller 19c is an example of a device controller. The operator input receiving unit 12 is an example of an operator input receiving unit.

In a case where the secondary terminal is an example of a first information terminal, video data captured by the secondary terminal is an example of first video data. In a case where the primary terminal is an example of the first information terminal, video data captured by the primary terminal is an example of the first video data, the camera 112 of the secondary terminal is an example of a second imaging unit, and the video data captured by the secondary terminal is an example of second data. The video data transmitted from the information terminal 10A is an example of third video data. The process to be performed by the communication system 1 in the present embodiment is an example of a communication control method.

Further, the present invention is not limited to these embodiments, but various variations and modifications may be made without departing from the scope of the present invention.

The present application claims the benefit of priority of Japanese Patent Application No. 2016-027022 filed on February 16, 2016, the entire contents of which are incorporated herein by reference.

### RELATED ART DOCUMENT

### PATENT DOCUMENT

Patent Document 1: Japanese Translation of PCT International Application Publication No. JP-T-2012-523890

## Claims

1. An information terminal that is a first information terminal, the information terminal comprising:
a first imaging unit configured to capture a first video near a device to which the first information terminal is attached, and to generate first video data;
a transmitting unit configured to transmit the first video data to a second information terminal that receives an operation for operating the device;
a moving state determining unit configured to determine a moving state of the device, the moving state being made in response to the operation; and
a video data transmission controller configured to control whether or not to transmit one of the first video data and second video data from the transmitting unit depending on the moving state, the second video data being generated by a second imaging unit capturing a second video near the device, the second imaging unit being different from the first imaging unit.

2. The information terminal according to claim 1, wherein the video data transmission controller continues transmitting the other one of the first video data and the second video data, regardless the moving state of the device.

3. The information terminal according to claim 1 or claim 2, wherein when the moving state of the device that has been determined by the moving state determining unit indicates that the device is not moving, the video data transmission controller stops transmitting the one of the first video data and the second video data.

4. The information terminal according to any one of claim 1 to claim 3, further comprising:
an operator instruction information receiving unit configured to receive operator instruction information for operating the device from the second information terminal; and
a device controller configured to control the device in response to the operator instruction information,
wherein the moving state determining unit acquires from the device the moving state of the device that has been controlled by the device controller, and determines the moving state of the device.

5. The information terminal according to any one of claim 1 to claim 3, further comprising:
an operator instruction information receiving unit configured to receive operator instruction information for operating the device from the second information terminal,
wherein the moving state determining unit determines the moving state of the device in response to the operator instruction information that has been received by the operator instruction information receiving unit.

6. The information terminal according to claim 4 or claim 5, wherein when the moving state indicates that the device is not moving and an audio volume of audio data that have been transmitted from the second information terminal is equal to or larger than a threshold value, the video data transmission controller stops transmitting the one of the first video data and the second video data.

7. The information terminal according to claim 3, wherein when the moving state that has been determined by the moving state determining unit indicates that the device is not moving, the video data transmission controller does not transmit third video data from the second information terminal.

8. A program that causes an information terminal that is a first information terminal to function as:
a first imaging unit configured to capture a first video near a device to which the first information terminal is attached, and to generate first video data;
a transmitting unit configured to transmit the first video data to a second information terminal that receives an operation for operating the device;
a moving state determining unit configured to determine a moving state of the device, the moving state being made in response to the operation; and
a video data transmission controller configured to control whether or not to transmit one of the first video data and second video data from the transmitting unit depending on the moving state, the second video data being generated by a second imaging unit capturing a second video near the device, the second imaging unit being different from the first imaging unit.

9. A communication control method comprising:
capturing by a first imaging unit a first video near a device, to which a first information terminal is attached, to generate first video data;
transmitting the first video data to a second information terminal that receives an operation for operating the device;
determining a moving state of the device, the moving state being made in response to the operation; and
controlling whether or not to transmit one of the first video data and second video data in the transmitting depending on the moving state, the second video data being generated by a second imaging unit capturing a second video near the device, the second imaging unit being different from the first imaging unit.

10. A communication system comprising:
a first information terminal configured to be attached to a device; and
a second information terminal configured to receive an operation for operating the device, and to communicate with the first information terminal,
the first information terminal including:
a first imaging unit configured to capture a first video near the device, and to generate first video data;
a first transmitting unit configured to transmit the first video data to the second information terminal;
a moving state determining unit configured to determine a moving state of the device, the moving state being made in response to the operation; and
a video data transmission controller configured to control whether or not to transmit one of the first video data and second video data from the first transmitting unit depending on the moving state, the second video data being generated by a second imaging unit capturing a second video near the device, the second imaging unit being different from the first imaging unit,
the second information terminal including:
an operator input receiving unit configured to receive an operation for controlling the device; and
a second transmitting unit configured to transmit to the first information terminal operator instruction information indicating the operation received by the operator input receiving unit.
